(19)

Europäisches
Patentamt
European
Patent Office
Office européen
des brevets

(11)  **EP 2 020 293 B1**

(12)  **EUROPEAN PATENT SPECIFICATION**

(45) Date of publication and mention
of the grant of the patent:
**14.09.2011  Bulletin 2011/37**

(51) Int Cl.:
*B41J 2/45* (2006.01)       *G06K 7/10* (2006.01)
*H04N 1/03* (2006.01)

(21) Application number: **08012351.6**

(22) Date of filing: **09.07.2008**

(54) **Linehead and imaging apparatus incorporating the same**

Linienkopf und Bildgebungsvorrichtung mit selbigem

Tête à fil et appareil d'imagerie l'incorporant

(84) Designated Contracting States:
**DE FR GB**

(30) Priority: **31.07.2007  JP 2007198405**
**28.02.2008  JP 2008047437**

(43) Date of publication of application:
**04.02.2009  Bulletin 2009/06**

(73) Proprietor: **Seiko Epson Corporation**
**Shinjuku-ku**
**Tokyo 163-0811 (JP)**

(72) Inventors:
• **Sowa, Takeshi**
**Suwa-shi**
**Nagano 392-8502 (JP)**

• **Nomura, Yujiro**
**Suwa-shi**
**Nagano 392-8502 (JP)**
• **Koizumi, Ryuta**
**Suwa-shi**
**Nagano 392-8502 (JP)**

(74) Representative: **HOFFMANN EITLE**
**Patent- und Rechtsanwälte**
**Arabellastraße 4**
**81925 München (DE)**

(56) References cited:
**EP-A- 0 878 773      EP-A- 1 275 513**
**DE-A1- 2 039 430     US-A1- 2005 179 962**
**US-B1- 6 480 219     US-B1- 6 489 984**

## Description

CROSS REFERENCE TO RELATED ART

Reference is hereby made to the disclosure of Japanese Patent Applications No. 2007-198405 filed on July 31, 2007 and No. 2008-47437 filed on February 28, 2008 including specification, drawings and claims.

BACKGROUND OF THE INVENTION

The present invention relates generally to a linehead and imaging apparatus incorporating the same, and more particularly to a linehead adapted to use a microlens array to project an array of light emitter devices onto the surface to be irradiated, thereby forming an array of imaging spots, and an imaging apparatus using the same.

So far, there has been an optical write linehead known in which a plurality of LED array chips are lined up in a LED array direction, and a LED array of each LED array chip is magnified and projected through an associated positive lens onto a photosensitive member so that images of light-emission dots at ends of adjacent LED array chips are adjacently formed at the same pitch as an inter-image pitch for the light-emission dots of the same LED array chips, as proposed in JP 02-4546 A. As the optical path involved is reversed, it turns into an optical read linehead.

JP 06-344596 A has proposed that such an arrangement as shown in JP 02-4546 A is constructed of two positive lenses to approximate projection light to parallel light thereby increasing the depth of focus.

JP 06-278314 A has come up with an optical write linehead wherein LED array chips are lined up in two rows at an interval with its repetitive phase set off by a half period, and positive lens arrays are located in two rows with each positive lens in association with each LED array chips so that the images of a light-emission dot array are lined up in a row on a photosensitive member.

Problems with these prior arts are that even when the images of the light-emission dot array are in alignment with one another at an equal pitch on an ideal image plane, there are misalignments of the light-emission dots on the photosensitive member upon the back-and-forth movement of the image plane in the lens's optical axis direction due to the shakes of the photosensitive member, etc. with the result that the light-emission arrays move relatively in the sub-scan direction, ending up with variations in the pitch between the scan lines (the pitch variation in the main scan direction).

Further, as the angle of view of each positive lens grows large, it causes the decrease in the quantity of rim light to increase according to the cosine fourth law (shading). To prevent this shading from giving rise to density variations of printed images, the quantity of light of each pixel (light-emission dot image) must remain constant on the image plane; for this, however, that shading must be corrected by changing the quantity of light of the light source (light-emission dot) for each light-emission dot. However, the intensity of light emission of the light source pixel (light-emission dot) has influences on service life; as the shading of the optical system grows large, there is a variation in the light quantity of the light-emission dot pitch over time and, hence, an image density variation, even though the uniform quantity of light is initially obtained on the image plane by adjustment of light quantity per light-emission dot.

US 6,480,219 B1, US 6489984 B1 and US 2005/179962 disclose previous arrangements useful for understanding the background to the present invention.

SUMMARY OF THE INVENTION

In view of such problems with the prior art as described above, one advantage obtainable with embodiments of the invention is to provide an optical write linehead comprising a plurality of positive lens lined up in array form and a plurality of light emitter devices located in a row corresponding to each lens, wherein even when there are fluctuations in the optical axis direction of a surface with light emitter devices lined up on it and a write surface, variations of light-emission dot images from misalignments are reduced. Another object of the invention is to reduce density variations from shading between imaging spots by the respective lenses. Yet another advantage obtainable with embodiments of the invention is to make it possible to use a drum-form photosensitive member wherein influences of changes in an optical direction distance based on its curvature are reduced.

A further advantage obtainable with embodiments of the invention is to provide an imaging apparatus incorporating such an optical write linehead, and an optical read linehead with the optical path reversed.

In embodiments of the invention, the aforesaid advantages are accomplishable by the provision of a linehead comprising a light emitter array including a plurality of light emitter blocks located at least in a first direction at intervals wherein each light emitter block includes at least one row of a plurality of light emitter devices lined up in array form in the first direction, characterized in that a lens array is located on an exit side of said light emitter array such that one positive lens system is in alignment with each light emitter block, a write surface is located on an imaging side of said lens array, and each positive lens system forming a part of said lens array comprises a telephoto optical system having confocally located two lens groups with an aperture stop located at a confocal plane of said telephoto optical system.

The arrangement being like such, even when one or both of the positions of the write surface and the surface with the light emitter devices located on it displace in the optical axis direction, there are no misalignments of imaging spots, and no density variations between imaging spots, resulting in prevention of deterioration of the ensuing image.

The aforesaid positive lens system may comprise two positive lenses.

The arrangement being like such, it is possible just only to facilitate fabricating individual lens arrays but also to facilitate correction of aberrations.

Preferably, the positive lens systems forming the aforesaid lens arrays should be all the same.

The arrangement being like such, it is possible to provide a uniform spacing between imaging spots that are images of the light emitter devices in the first direction (main scan direction), and to make lens array fabrication easy.

The aforesaid write surface may be defined by a plane.

The arrangement being like such, even when a plurality of light emitter blocks are lined up in a sub-scan direction (the second direction), writing can be applied to all the rows in the same state, resulting in none of the density variations between imaging spots, etc., and prevention of deterioration of the ensuing image.

The aforesaid write surface may be defined by a cylindrical surface.

The arrangement being like such, there is a linehead obtained that lends itself to an exposure head of imaging apparatus using a drum-form photosensitive member.

Preferably, the optical surface located in, and nearest to the image side of, at least the image-side positive lens group in the aforesaid positive lens system defines a plane.

The arrangement being like such, the exit surface of the lens nearest to the image plane can be configured as a plane so that foreign matters such as dust and toner deposited onto that exit surface can easily is cleaned up: improved cleanability is achievable.

Preferably, the aforesaid aperture stop should be configured in such a way as to limit the aperture diameter at least in the first direction.

The arrangement being like such, it is possible to address the main scan direction (the first direction) about which misalignments of at least off-axis imaging spots become a problem.

Preferably, the aforesaid light-emission block includes plural rows of said light emitter devices in the second direction (sub-scan direction) orthogonal to the first direction.

The arrangement being like such, it is possible to address the formation of images at an increased imaging spot density.

Preferably, plural rows of said light emitter blocks should be lined up in the second direction orthogonal to the first direction.

The arrangement being like such, it is possible to address the formation of images at an increased imaging spot density.

Preferably, the aforesaid light emitter device comprises an organic EL device.

The arrangement being like such, it is possible to make much contribution to the uniform formation of images in the plane.

Alternatively, the aforesaid light emitter device may comprise a LED.

The arrangement is being like such, it is possible to address a linehead using LED arrays, too.

The invention also provides an imaging apparatus comprising at least two imaging stations each comprising an imaging unit which comprises a charging means around an image carrier, a linehead as recited above, a developing means and a transfer means, so that imaging is implemented in a tandem mode by letting a transfer medium pass through each station.

The arrangement being like such, it is possible to set up an imaging apparatus such as a printer that is of small format, has higher resolving power and undergoes less image deterioration.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

BRIEF DESCRIPTION OF THE DRAWINGS

To better understand the claimed invention, and to show how the same may be carried into effect, reference will be made, by way of example only, to the accompanying Drawings, in which:

Fig. 1 is illustrative in perspective of a portion corresponding to one microlens of the linehead according to one embodiment of the invention;

Fig. 2 is illustrative in perspective of a portion corresponding to one microlens of the linehead according to one embodiment of the invention;

Fig. 3 is illustrative in perspective of a portion corresponding to one microlens of the linehead according to one embodiment of the invention;

Fig. 4 is illustrative of what relations the light emitter array according to one embodiment of the invention has to a microlens having a minus optical magnification;

Fig. 5 is illustrative of one exemplary memory table of a line buffer with image data stored in it;

Fig. 6 is illustrative of imaging spots defined by odd- and even-numbered light emitter devices and lined up in the same row in the main scan direction;

Fig. 7 is illustrative in schematic of one exemplary light emitter array used as a linehead;

Fig. 8 is illustrative of imaging positions in the event that, with the arrangement of Fig. 7, the surface of an image carrier to be exposed to light is irradiated with light produced out of the respective light emitter devices through microlenses;

Fig. 9 is illustrative of in what state imaging spots are formed in the sub-scan direction in Fig. 8;

Fig. 10 is illustrative of an example where, when microlenses are lined up in a plurality of rows, imaging spots are inverted and formed in the main scan direction;

Fig. 11 is illustrative in schematic section of the general construction of one example of the inventive imaging apparatus using an electrophotographic process;

Fig. 12 illustrates the principles of the invention;

Fig. 13 is a partly taken-apart perspective view of the construction of the optical write linehead according to one example of the invention;

Fig. 14 is a partly enlarged perspective view of Fig. 13;

Fig. 15 is a sectional view as taken along the sub-scan line of Fig. 13;

Fig. 16 is a plan view illustrating one exemplary arrangement of Fig. 13 wherein a light emitter array and microlens arrays are located;

Fig. 17 is illustrative of in what relation one microlens corresponds to an associated light emitter block;

Fig. 18 is a plan view of a stop plate located in correspondence to a light emitter block on the light emitter array;

Fig. 19 is illustrative of an aperture in the stop plate corresponding to one light emitter block;

Fig. 20 is illustrative, as in Fig. 16, of two rows of light emitter blocks located in place;

Fig. 21 is illustrative, as in Fig. 16, of four rows of light emitter blocks located in place;

Fig. 22 is illustrative, as in Fig. 16, of three rows of light emitter devices located in place;

Fig. 23 is illustrative, as in Fig. 16, of four rows of light emitter devices located in place;

Fig. 24 is a sectional view, as taken along the sub-scan direction, illustrative of what relations an optical system for the optical write linehead has to a photosensitive member that is in drum form;

Fig. 25 is a sectional view, as taken along the main scan direction, of a microlens array defined by two microlens arrays;

Fig. 26 is a sectional view of the optical system of Example 1 corresponding to one microlens as taken in the main scan and sub-scan directions;

Fig. 27 is a sectional view of the optical system of Example 2 corresponding to one microlens as taken in the main- and sub-scan directions;

Fig. 28 is a sectional view of the optical system of Example 3 corresponding to one microlens as taken in the main- and sub-scan directions;

Fig. 29 is a sectional view of the optical system of Example 4 corresponding to three rows of microlenses as taken in the main- and sub-scan directions;

Fig. 30 is a plan view illustrative of how to line up a light emitter array and microlens arrays in Example 4.

DESCRIPTION OF THE PREFERRED EMBODIMENTS

Before giving a detailed account of the optical system for the inventive linehead, how to locate light emitter devices, and light-emission timing is briefly explained.

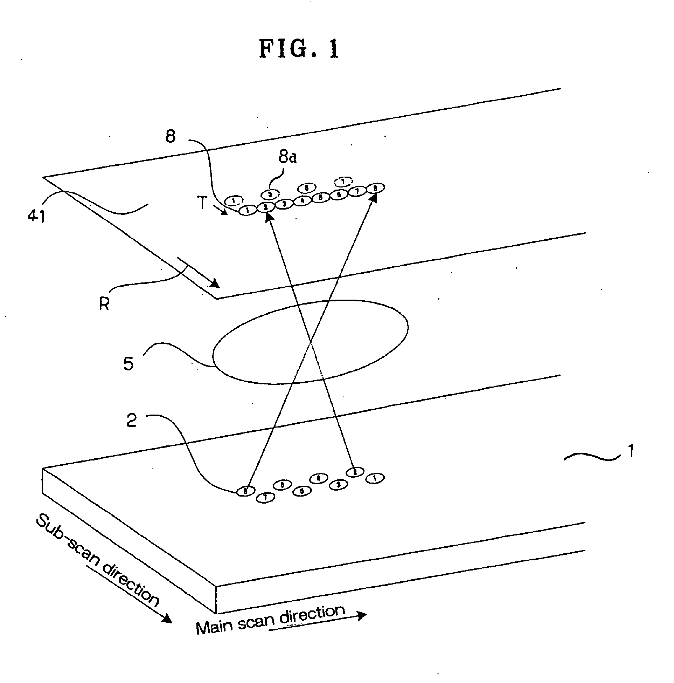

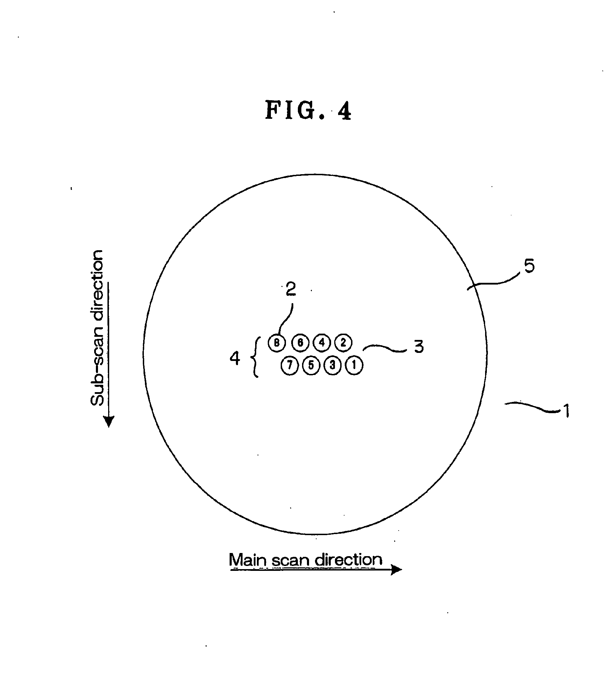

Fig. 4 is illustrative of what relation a light emitter array 1 according to one embodiment of the invention has to a microlens 5 having a minus optical magnification. In the linehead here, two rows of light emitter devices correspond to one microlens 5. However, it is understood that the microlens 5 is an imaging device having a minus (inverted imaging) optical magnification: the positions of the light emitter devices are inverted in the main- and sub-scan directions. That is, in the arrangement of Fig. 1, even-numbered light emitter devices (8, 6, 4, 2) are lined up upstream of the direction of movement of an image carrier (in the first row) while odd-numbered light emitter devices (7, 5, 3, 1) are done downstream (in the second row), and large-numbered light emitter devices are lined up on the front side in the main scan direction.

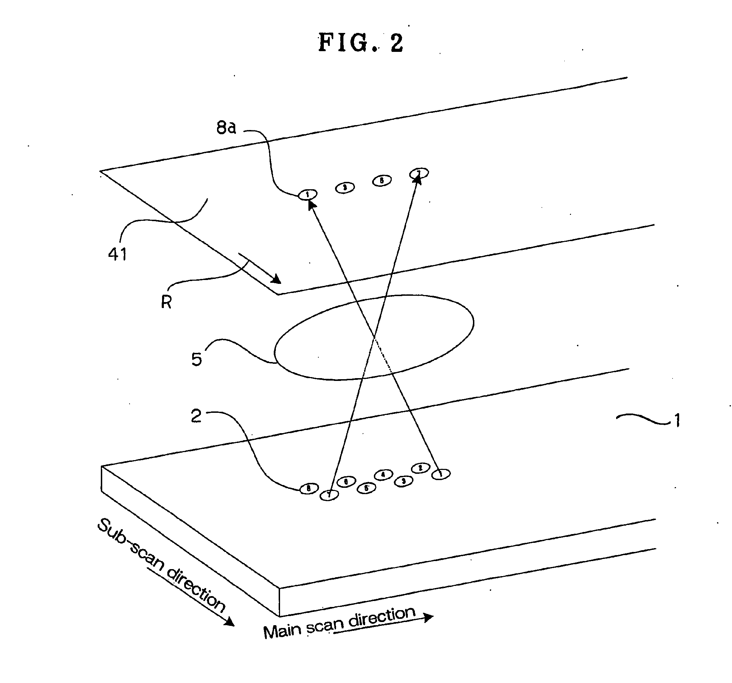

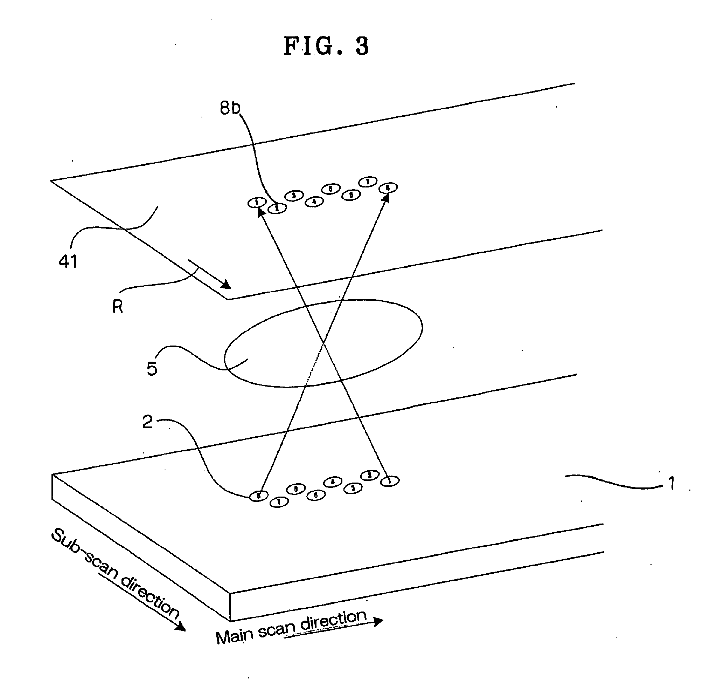

Figs. 1, 2 and 3 are illustrative in perspective of a portion of this embodiment corresponding to one microlens of the linehead. As shown in Fig. 2, imaging spots 8a on an image carrier 41 corresponding to the odd-numbered light emitter devices 2 lined up downstream of the image carrier 41 are formed at positions inverted in the main scan direction. Capital R is indicative of the direction of movement of the image carrier 41. As shown in Fig. 3, imaging spots 8b on the image carrier 41, lined up upstream of the image carrier 41 (in the first row) and corresponding the even-numbered light emitter devices 2, are formed at downstream positions inverted in the sub-scan direction. In the main scan direction, however, the positions of imaging spots from the front side are corresponding to light emitter devices 1 to 8 in order. In the embodiment here, accordingly, it is appreciated that by adjustment of the timing to form the imaging spots in the sub-scan direction of the image carrier, the imaging spots can be formed in line with the main scan direction.

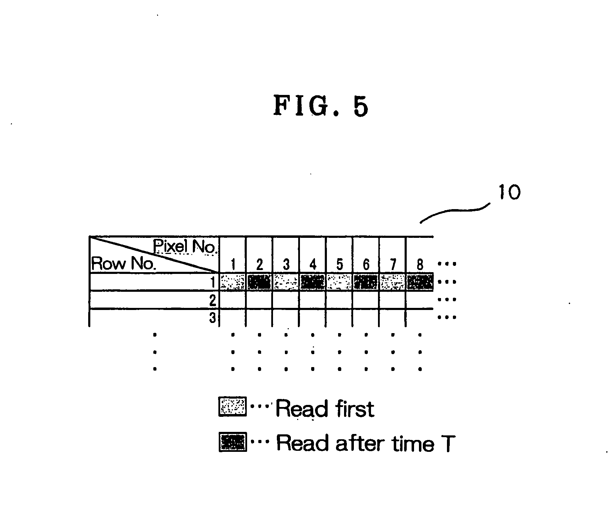

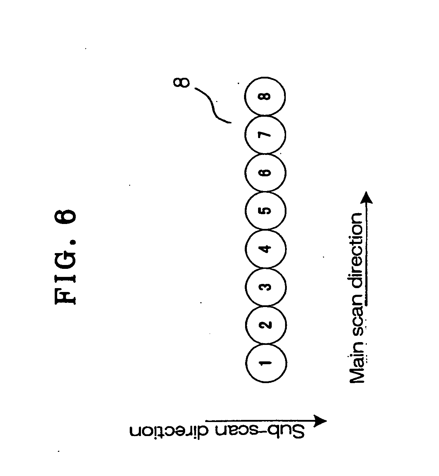

Fig. 5 is illustrative of one exemplary memory table 10 of a line buffer with image data stored in it. In the memory table 10 of Fig. 5, the image data is stored while it is inverted in the main scan direction with respect to the numbers of the light embitter devices of Fig. 4. In Fig. 5, of the image data stored in the memory table 10 of the line buffer, the first data (1, 3, 5, 7) corresponding to the light emitter devices upstream (the first row) of the image carrier 41 is first read to let them emit light. Then, after a time T, the second image data (2, 4, 6, 8), stored in a memory address and corresponding to the light emitter devices downstream (the second row) of the image carrier 41 is read to let them emit light. Thus, the imaging spots in the first row on the image carrier are formed in line with those in the second row in the main scan direction, as indicated by the position of 8 in Fig. 6.

Fig. 1 is illustrative in conception and perspective of an example of reading the image data at the timing of Fig. 5 to form imaging spots. As described with reference to Fig. 5, the light emitter devices upstream (the first row) of the image carrier 41 are first allowed to emit light to form the imaging spots on the image carrier 41. Then, after the passing of a given timing T, the odd-numbered light emitter devices downstream (the second row) of the image carrier 41 are allowed to emit light to form the imaging spots on the image carrier. In this case, the imaging spots by the odd-numbered light emitter devices are going to be formed at the position in line with the position of 8 in the main scan direction as shown in Fig. 6, not at the position of 8a as described with reference to Fig. 2.

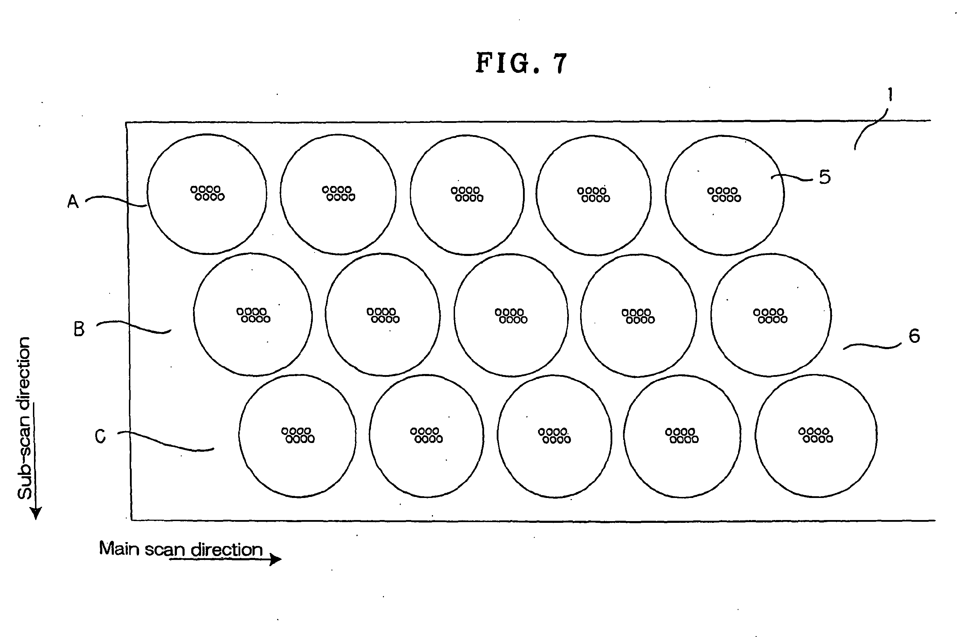

Fig. 7 is illustrative in schematic of one exemplary light emitter array used as the linehead. In Fig. 7, the light emitter array 1 is provided with a light emitter block 4 (see Fig. 4) wherein plural rows 3 of light emitter devices, each of which includes a plurality of light emitter devices 2 lined up in the main scan direction, are provided in the sub-scan direction. In the example of Fig. 7, the light emitter block 4 comprises two rows 3 of light emitter devices lined up in the sub-scan direction, wherein one each row comprises four light emitter devices 2 lined up in the main scan direction (see Fig. 4). Multiple such light emitter blocks 4 are located on the light emitter array 1, with one each emitter block 4 located corresponding to the microlens 5.

A plurality of microlenses 5 are provided in the main- and sub-scan directions of the light emitter array 1 to form a microlens array (MLA) 6. In this MLA 6, the front microlens in the sub-scan direction is set off the one in the main scan direction. Such MLA 6 array corresponds to an arrangement wherein light emitter devices are located zigzag on the light emitter array 1. In the example of Fig. 7, MLAs 6 are lined up in three rows in the sub-scan direction; for the sake of explanation, the unit blocks 4 corresponding to the three rows of MLAs 6 in the sub-scan direction are each sectioned into group A, group B and group C, respectively.

When, as described above, a plurality of light emitter devices 2 are located in the microlens 5 having a minus optical magnification and a plurality of rows of such lenses are located in the sub-scan direction, the formation of imaging spots lined up in the main scan direction of the image carrier 41 requires the following image data controls: (1) inversion of the sub-scan direction, (2) inversion of the main scan direction, (3) adjustment of the timing of when the plural rows of light emitter devices in the lens are to emit light, and (4) adjustment of the timing of when the inter-group light emitter devices are to emit light.

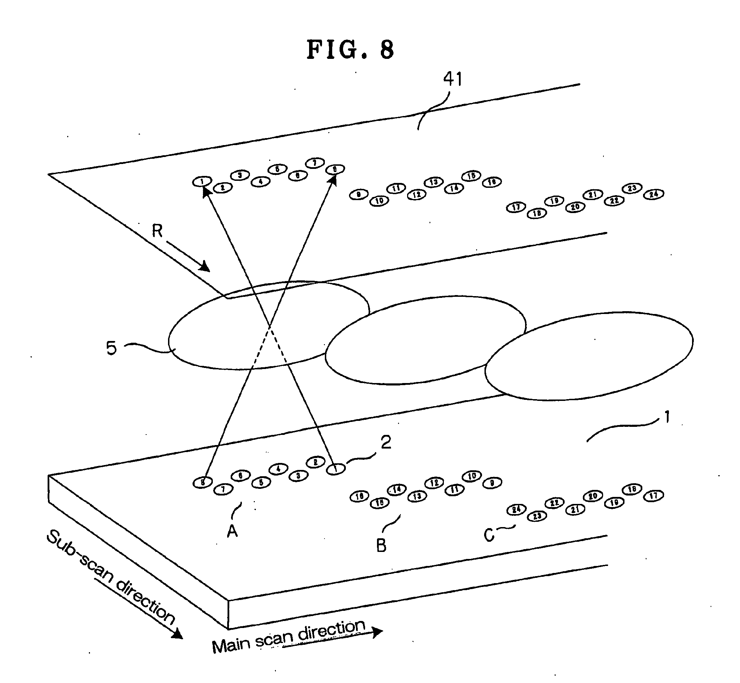

Fig. 8 is illustrative of imaging positions in the event that, in the arrangement of Fig. 7, the surface of the image carrier to be exposed to light is irradiated with light produced out of each light emitter device 2 via the microlens 5. In Fig. 8, the light emitter array 1 is provided with the unit block 4 sectioned into group A, group B and group C, as explained with reference to Fig. 7. The light emitter device row of each unit block 4 sectioned into group A, group B and group C is divided into the upstream (first row) and downstream (second row) sides of the image carrier 41 so that the even-numbered light emitter devices are allocated to the first row and the odd-numbered ones are allocated to the second row.

For group A, each light emitter device 2 is operated as described with reference to Figs. 1, 2 and 3, whereby imaging spots are formed on the image carrier 41 at positions inverted in the main- and sub-scan directions. Thus, the imaging spots are formed on the image carrier 41 in the same row in the main scan direction in order of 1 to 8. For group B, too, the same operation is implemented while the image carrier 41 is moved for a given time in the sub-scan direction. Further for group C, the operation is implemented while the image carrier 41 is moved for a given time in the sub-scan direction. That way there are imaging spots based on the entered image data formed in the same row in the main scan direction in order 1 to 24 ···.

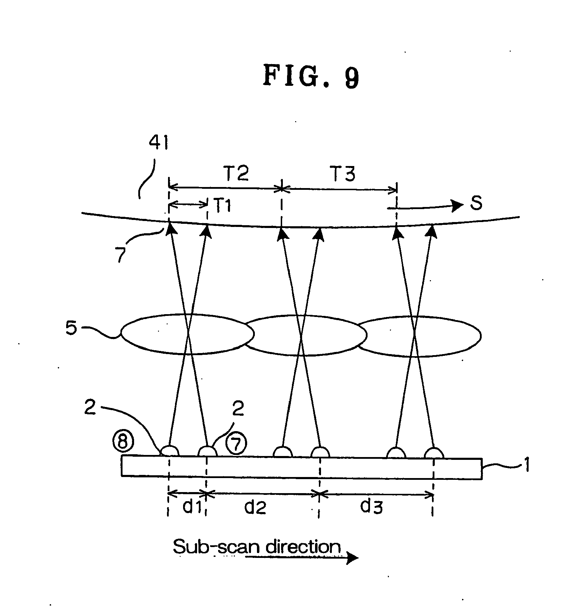

Fig. 9 is illustrative of how, in Fig. 8, the imaging spots are formed in the sub-scan direction. Here, capital S is the speed of movement of the image carrier 41, d1 is the spacing between the first row and the second row of light emitter devices in group A, d2 is the spacing between the second row of light emitter devices in group A and the second row of light emitter devices in group B, d3 is the spacing between the second row of light emitter devices in group B and the second row of light emitter devices in group C, T1 is the time from after the emission of light out of the second row of light emitter devices in group A until the first row of light emitter devices emit light, T2 is the time taken for the imaging positions by the second row of light emitter devices in group A to move to the imaging positions by the second row of light emitter devices in group B, and T3 is the time taken for the imaging positions by the second row of light emitter devices in group A to move to the imaging positions by the second row of light emitter devices in group C.

T1 may be found as follows. T2 and T3, too, may likewise be found by substituting d2, and d3 for d1.

$$T1 = | (d1 \times \beta)/S |$$

Here the respective parameters are:

d1 is the distance of the light emitter device in the sub-scan direction,

S is the speed of movement of the imaging plane (image carrier), and

$\beta$ is the magnification of the lens.

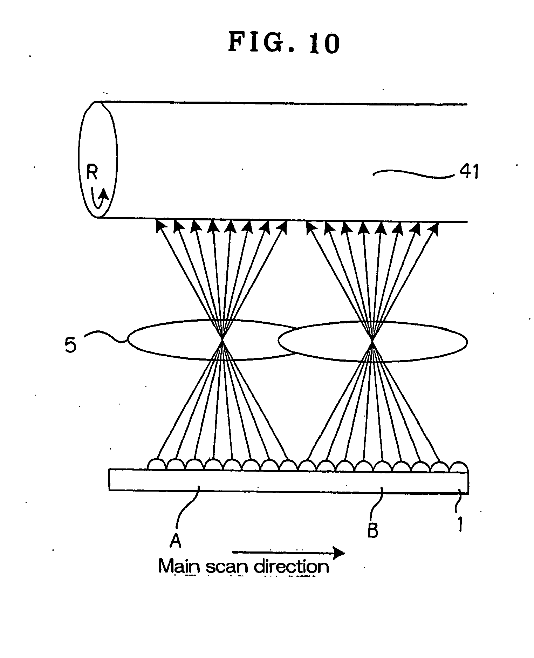

In Fig. 9, after the time T2 at which the second row of light emitter devices in group A emit light, the second row of light emitter devices in group B are allowed to emit light. Further, after the time T3 from T2, the second row of light emitter devices in group C are allowed to emit light. The first row of light emitter devices in each group are allowed to light after the time T1 from the time when the second row of light emitter devices emit light. Such processing ensures that as shown in Fig. 8, the imaging spots by the light emitters two-dimensionally located on the light emitter array 1 can be formed on the image carrier in a row. Fig. 10 is illustrative of an example wherein when there are a plurality of rows of microlenses located, the imaging spots are inverted and formed in the main scan direction of the image carrier.

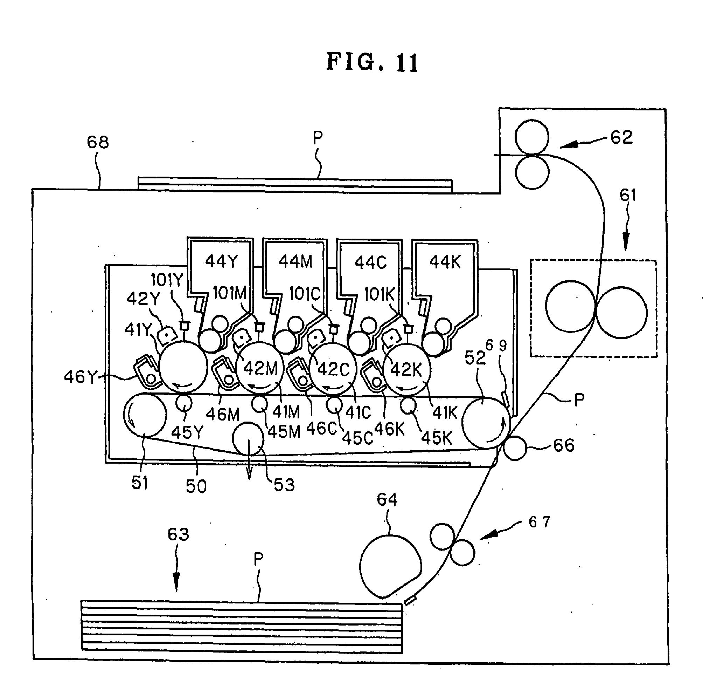

Using such a linehead as described above, an imaging apparatus may be set up. In one example, that linehead may be applied to a tandem color printer (imaging apparatus) wherein four lineheads are used to expose four photosensitive members to light so that four colors of images can be formed at the same time for transfer onto one endless intermediate transfer belt (intermediate transfer medium). Fig. 11 is a longitudinally sectioned view illustrative of one example of the tandem imaging apparatus using organic EL devices as light emitter devices. This tandem image apparatus comprises four lineheads 101K, 101C, 101M, 101Y of similar construction located at the positions to be exposed of four photosensitive drums (image carriers) 41K, 41C, 41M, 41Y of similar construction.

As shown in Fig. 11, that imaging apparatus is provided with a driving roller 51, a driven roller 52 and a tension roller 53. Further, there is an intermediate transfer belt (intermediate transfer medium) 50 provided, which, upon receipt of tension from the tension roller 53 to stretch it tight, is endlessly driven in the direction indicated by an action arrow (counterclockwise). The four photosensitive members 41K, 41C, 41M, 41Y, each having a photosensitive layer around and working as an image carrier, are located at a given interval with respect to that intermediate transfer belt 50.

The capitals K, C, M and Y affixed to the aforesaid reference numerals mean black, cyan, magenta and yellow, respectively, indicating photosensitive members for black, cyan, magenta and yellow. The same will hold for other members, too. As the intermediate transfer belt 50 is driven, the photosensitive members 41K, 41C, 41M, 41Y are rotationally driven in synchronization with it in the direction indicated by the arrow (clockwise). Around each photosensitive member 41 (K, C, M, Y) there is a charger means (corona charger) 42 (K, C, M, Y) that enables the peripheral surface of the photosensitive member 41 (K, C, M, Y) to be uniformly charged, and such an inventive linehead 101 (K, C, M, Y) as described above, which allows that peripheral surface uniformly charged by the charger means 42 (K, C, M, Y) to be subject to sequential line scans in synchronization with the rotation of the photosensitive member 41 (K, C, M, Y).

Further, the imaging apparatus comprises a developer 44 (K, C, M, Y) which adds a developing agent or toner to an electrostatic image formed by the linehead 101 (K, C, M, Y) to convert it into a visible (toner) image, a primary transfer roller 45 (K, C, M, Y) that provides a transfer means for sequentially transferring the toner images developed at the developer 44 (K, C, M, Y) onto the intermediate transfer belt 50 to be primarily transferred, and a cleaning unit 46 (K, C, M, Y) that provides a cleaning means for removal of toner remaining on the surface of the photosensitive member 41 (K, C, M, Y) after transfer.

Each linehead 101 (K, C, M, Y) here is located such that its array direction lies along the generating line of the photosensitive drum 41 (K, C, M, Y), and such that its light-emission energy peak wavelength substantially matches with the sensitive peak wavelength of the photosensitive member 41 (K, C, M, Y).

For the developer 44 (K, C, M, Y), for instance, a nonmagnetic one-component toner is used as the developing agent. That one-component developing agent is delivered to a developing roller via, for instance, a feed roller, and the thickness of the developing agent deposited onto the surface of the developing roller is controlled by a control blade. Then, that developing roller is brought in contact or engagement with the photosensitive member 41 (K, C, M, Y) to deposit the developing agent onto the photosensitive member 41 (K, C, M, Y) depending on its potential level so that toner images are obtained by development.

The respective black, cyan, magenta and yellow toner images formed at the 4-color monochromatic toner image-formation station are primarily transferred in order onto the intermediate transfer belt 50 by a primary transfer bias applied to the primary transfer roller 45 (K, C, M, Y) so that they are superposed together on the intermediate transfer belt 50 into a full-color toner image. Then, the full-color toner image is secondarily transferred at a secondary transfer roll 66 onto a recording medium P such as paper, whereupon it is passed through a pair of fixing rollers 61 defining a fixing unit for fixation onto the recording medium P. Finally, the recording medium P is ejected through a pair of ejection rollers 62 onto an output tray 68 mounted on top of the apparatus.

It is here noted that reference numeral 63 is indicative of a feeder cassette with a number of recording media P piled up in it; 64 a pickup roller adapted to feed the recording media P one by one from the feeder cassette 63; 65 a pair of gate rollers adapted to control the feed timing of when to feed the recording media P to the secondary transfer portion of the secondary transfer roller 66; 66 the secondary transfer roller working as the secondary transfer means adapted to define the secondary transfer portion between it and the intermediate transfer belt 50; and 67 a cleaning blade working as the cleaning means adapted to remove toner remaining on the surface of the intermediate transfer belt 50 after the secondary transfer.

The invention is specifically concerned with the optical system for such a linehead (optical write linehead) as described above. First of all, the principles are explained.

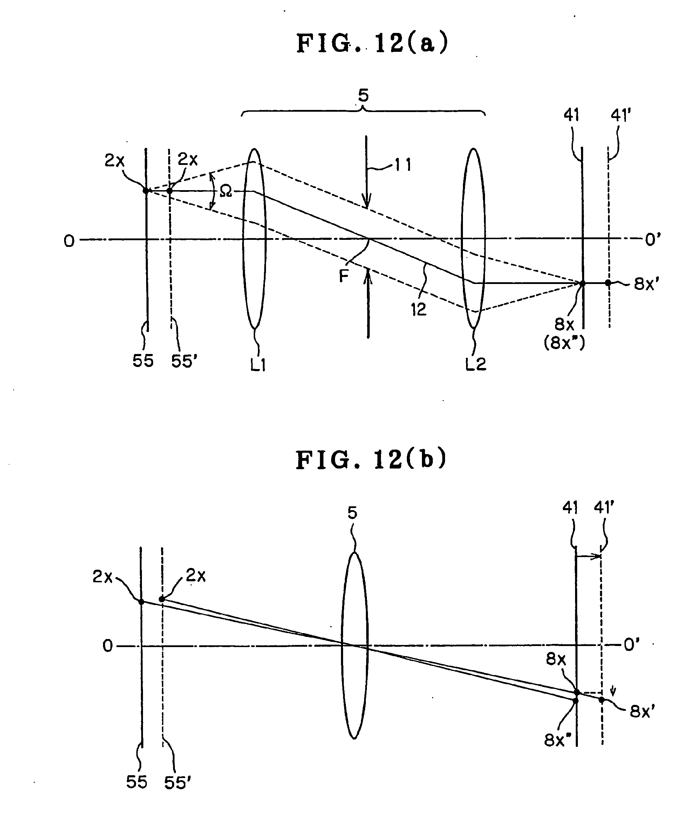

Fig. 12 is illustrative of the principles of the invention. Fig. 12 is illustrative of relations between an light emitter device 2x at the end of a row of light emitter devices lined up on the surface of a light emitter array 1, a microlens 5 adapted to project that row of light emitter devices, and a photosensitive member (image carrier) 41 onto which that row of light emitter devices is to be projected. Fig. 12(a) is about the invention, and Fig. 12 (b) is about the prior art. Generally in the prior art of Fig. 12(b), the microlens 5 has an aperture defined by its outside shape. Accordingly, an imaging spot 8x that is an image of the end light emitter device 2x on the photosensitive member 41 is imaged on a straight line passing through the centers of the end light emitter device 2x and microlens 5. As the surface of the photosensitive member 41 that is an image plane shuttles back and forth in the direction of a lens's optical axis O-O' due to shakes of the photosensitive member and moves to a position indicated by 41' in Fig. 12(b), it causes the position of the imaging spot 8x on the photosensitive member 41 to shift to a position 8x' on that straight line: it gives rise to a misalignment of the imaging spot. There is thus a variation of the pitch between scan lines drawn by the relative movement of that imaging-spot 8x in the sub-scan direction (a pitch variation of the imaging spot in the main scan direction).

Likewise, as the surface 55 of the light emitter array 1 that is an object plane shuttles back and forth in the direction of the lens's optical axis O-O' due to the attachment of the light emitter array 1 or the like and moves to a position indicated by 55' in Fig. 12(b), it causes the position of imaging spot 8x that is an image of the end light emitter device 2x on the photosensitive member 41 to shift to a position 8x" on the straight line passing through the centers of the end light emitter device 2x and microlens 5: it gives rise to a misalignment of the imaging spot. There is thus a variation of the pitch between scan lines drawn by the relative movement of that imaging-spot 8x in the sub-scan direction (a pitch variation of the imaging spot in the main scan direction).

In the invention as shown in Fig. 12(a), therefore, the microlens 5 is made up of a telephoto lens system that comprises a combination of, in order from its object side, a first positive lens L1 and a second positive lens L2 coaxially located on the optical axis O-O' wherein the image-side (rear) focus of the first positive lens L1 matches with the object-side (front) focus of the second positive lens L2 on a point (confocal point) F, and an aperture stop 11 is located at the position of that confocal point F and coaxially with the optical axis O-O'. Thus, as the microlens 5 is made up of a telephoto lens system comprising two positive lenses L1 and L2 with the aperture stop 11 located at the position of that confocal point F, it permits a chief ray 12 coming out of the end light emitter device 2x and passing through the center of the aperture stop 11 to make its way parallel with the optical axis O-O' until it reaches the first positive lens L1. Then, the chief ray is refracted through the first positive lens L1, passing through the center of the aperture stop 11, and entering the second positive lens L2 where it is refracted, making its way parallel with the optical axis O-O'. Accordingly, even when the photosensitive member 41 shifts to the position of 41' in the direction of the optical axis O-O', the position of the imaging spot 8x on the photosensitive member 41 becomes the position 8x' of the chief ray 12 after refraction through the microlens 5: there is no misalignment of the imaging spot 8x even when the position of the photosensitive member 41 shakes back and forth.

Likewise, even when the surface 55 of the light emitter array 1 moves to a position 55' in the direction of the lens's optical axis O-O', the position of the imaging spot 8x on the photosensitive member 41 becomes the position 8x" of the chief ray 12 after refraction through the microlens 5; there is no misalignment of the imaging spot 8x even when the position of the surface 55 of the light emitter array shakes back and forth.

Further, as the telephoto lens system comprising two confocal positive lenses L1 and L2 with the aperture stop 11 located at that confocal point F is used as the microlens 5, it permits a divergent solid angle $\Omega$ from the light emitter device 2 of a light beam coming out of the light emitter device 2 at any position on the surface 55 of the light emitter array 1 and passing through the aperture in the aperture stop 11 (a divergent solid angle $\Omega$ from the end light emitter device 2 is shown in Fig. 12 (a)) to be the same at any position on the surface 55 of the light emitter array 1, and permits the center ray of the divergent light beam to be vertical to the surface 55 of the light emitter array 1. Accordingly, there is none of the shading phenomenon wherein the decrease in light quantity grows large according to the cosine fourth law of a lens: as long as the light quantity of the light emitter device 2 remains same, the density of the imaging spot 8 on the photosensitive member 41 of any of the row of the light emitter devices 2 lined up on the light emitter array 1 is invariable and free from variations.

Accordingly, as the aforesaid optical system for the inventive linehead is used with an optical write linehead, there is none of such pitch variations as occurring with the prior art imaging spot 8 in the main scan direction, and none of the pitch variations between scan lines drawn in association with the movement of the imaging spot 8 in the sub-scan direction.

That is, the invention provides a linehead comprising a plurality of light emitter devices lined up in a row in the main scan direction and one positive lens system located in association with the plurality of light emitter devices so that the image of the row of light emitter devices (the array of imaging spots) is projected onto a projection plane (photosensitive member) to form an image, wherein that projection optical system is configured in the so-called telecentric configuration on both sides; even when there is an axial direction displacement of one or both of the position of the projection plane (photosensitive member) and the surface of the light emitter array, there is no misalignment of imaging spots or no density variation between the imaging spots, so that the ensuing image is free from deterioration.

In this case, for the function of the aperture stop 11, it is only needed to limit the diameter of the aperture in a direction (the main scan direction) in which there is a problem with the misalignment of an at least off-axis imaging spot; when an array of one row of light emitter devices is provided in association with one positive lens system as in the prior art (Patent Publications 1 and 3), it is only needed to limit the diameter of the aperture in the main scan direction. When, as in the aforesaid embodiment of the invention, two rows of arrays are located very closely in the sub-scan direction (Fig. 4), too, it is desired to limit the diameter of the aperture in the main scan direction, but of course, the diameter of the aperture in the sub-scan direction may also be limited. In other words, the aperture stop 11 may be of any of circular, oval, and rectangular shapes.

In the explanation of the embodiment with reference to Fig. 12, the positive lenses L1 and L2 forming part of the microlens 5 are each composed of one lens; however, the microlens 5 may be made up of a lens system of positive refracting power wherein one each is composed of two or more lenses.

The foregoing is directed to the optical write linehead. If the optical path involved is reversed, there is an optical read linehead set up for reading images: a plurality of light receptor devices are lined up in a row in the main scan direction, and the image of the row of light receptor devices (an array of reading spots) is back projected onto a read plane to read images. In this case, too, the projection optical system is configured in the so-called telecentric configuration on both its side, or two positive lenses having a confocal point are used with an aperture stop located at the position of that confocal point. In any case, there is the telephoto lens system set up: even when there is an axial direction displacement of one or both of the read plane and the surface of the light receptor device array, there is no misalignment of imaging spots or no density variation between the imaging spots, so that the ensuing image is free from deterioration. In Fig. 12(a) here, reference numeral 41 is indicative of the read plane, and 2x of an end light receptor device, with the principles being the same as is the case with the optical system for the optical write linehead.

The optical write linehead according to one example to which such inventive principles are applied is now explained.

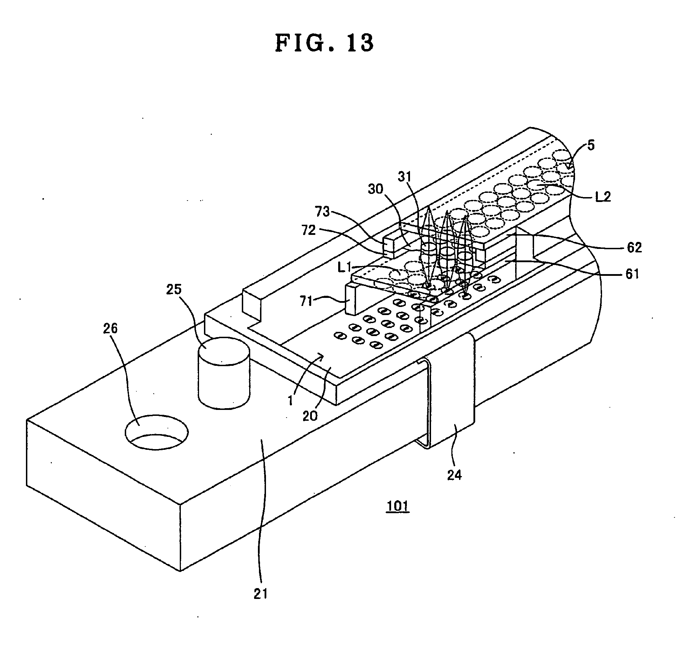

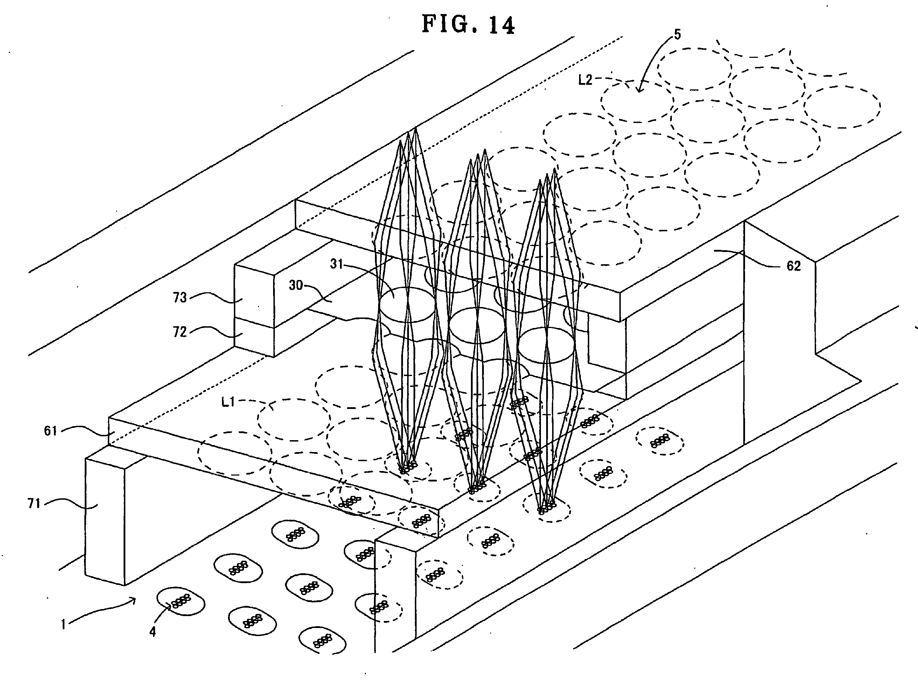

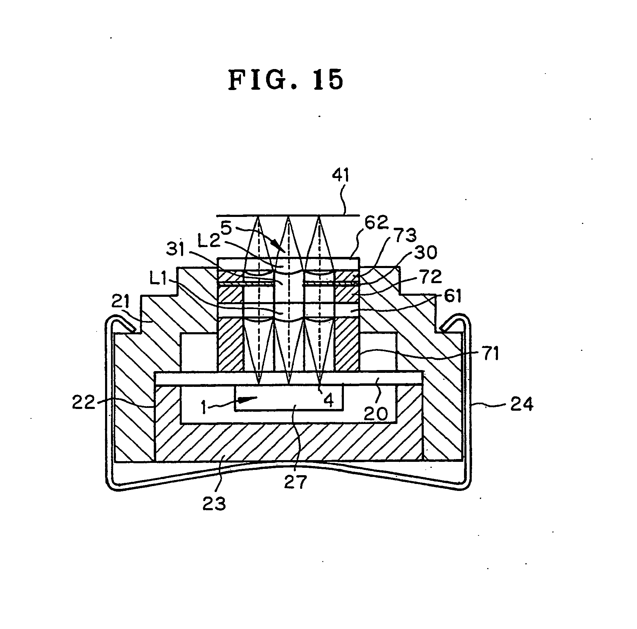

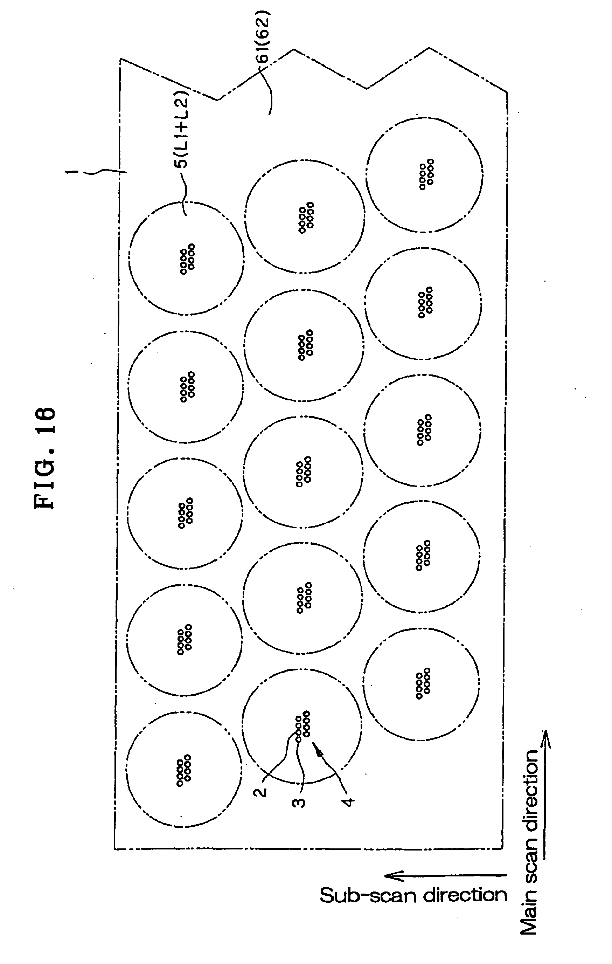

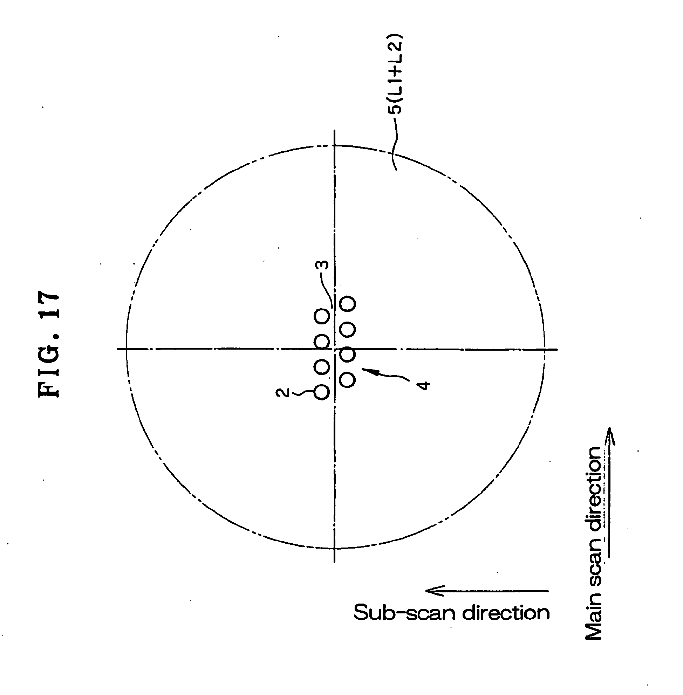

Fig. 13 is a partly taken-apart perspective view illustrative of the construction of the optical write linehead according to this example, and Fig. 14 is a partly enlarged perspective view of that. Fig. 15 is a sectional view of that optical write linehead as taken in its sub-scan direction. Throughout the following explanation, it is noted that while the center of each row of microlenses 5 is not coplanar in the sub-scan direction, the section is taken in the sub-scan direction in such a way as to pass through the center of each row of microlenses. Fig. 16 is a plan view illustrative of how to locate a light emitter array and a microlens array in this example. Further, Fig. 17 is illustrative of what relations one microlens has to the associated light emitter block.

In this example, as in Figs. 4 and 7, two light emitter device rows 3, each comprising four organic EL emitter devices 2 lined up in the main scan direction, are provided in the sub-scan direction into one light emitter block 4. A plurality of such light emitter blocks 4 are provided in the main- and sub-scan directions into a light emitter array 1. The light emitter blocks 4 are lined up in such zigzag fashion that the front position in the sub-scan direction is set off that in the main scan direction. In the example of Fig. 16, the light emitter blocks 4 are lined up in three rows in the sub-scan direction. Formed on the back surface of a glass substrate 20, such emitter array 1 is driven by way of a driving circuit formed on the back surface of the same glass substrate 20. It is here noted that the organic EL devices (light emitter devices 2) on the back surface of the glass substrate 20 are sealed up by a seal member 27.

The glass substrate 20 is fitted in an associated dent 22 in a longitudinal casing 21, and a back lid 23 is covered over it for fixation using a fixture 24. An optical write linehead 101 is fixed in place by inserting alignment pins 25 provided at both ends of the longitudinal casing 21 into associated alignment holes in the imaging apparatus, and screwing fixing screws into threaded holes in the imaging apparatus through insertion holes 26 in both ends of the longitudinal casing 21.

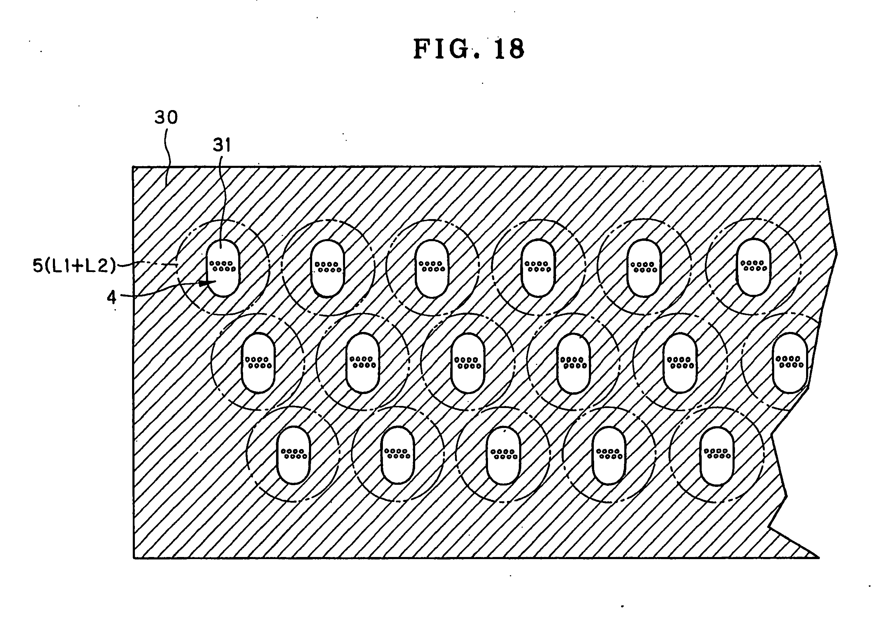

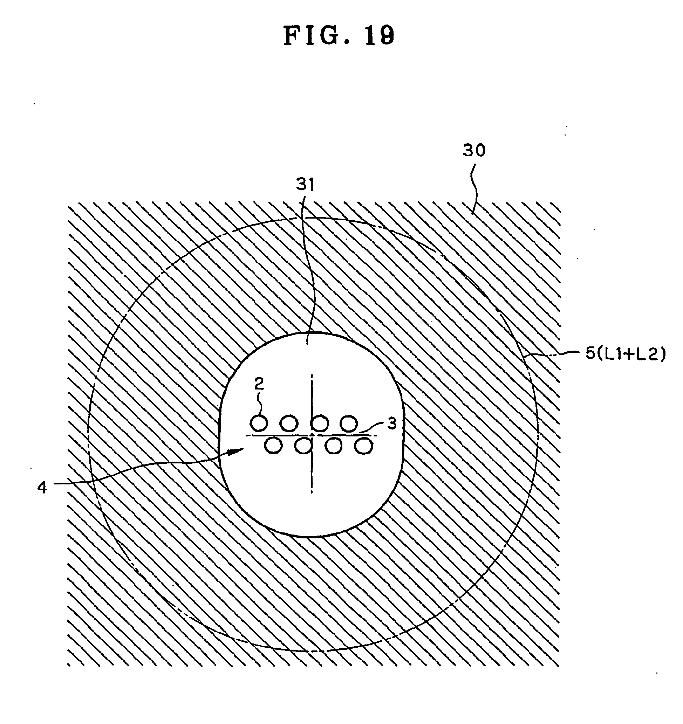

And on the surface side of the glass substrate 20 in the casing 21, there is a first microlens array 61 comprising positive lens components L1 located via a first spacer 71 such that the center of each light emitter block 4 of the light emitter array 1 is in line with the positive lens L1. On that there is a stop plate 30 having apertures 31 (Figs. 18 and 19) located via a second spacer 72 such that one each aperture 31 is in line with the center of each light emitter block 4 of the light emitter array 1. On that, there is a second microlens array 62 comprising positive lens components L2 located via a third spacer 73 such that one each positive lens L2 is in line with the center of each light emitter block 4 of the light emitter array 1.

Thus, the lens array of microlenses 5 for projecting the light emitter device row of each light emitter block 4 comprises a combination of the first microlens array 61 with the second microlens array 62.

And, based on the invention, the image-side (back) focus of the positive lenses L1 forming the first microlens array 61 is in alignment with the object-side (front) focus of the positive lens L2 forming the second microlens array 62, and the thickness of the second 72, and the third spacer 73 is set such that the stop plate 30 is positioned at that match plane. Details of the stop plate 30 are shown in Figs. 18 and 19. More specifically, Fig. 18 is a plan view of the stop plate 30 located in correspondence to the light emitter blocks 4 of the light emitter array 1, and Fig. 19 is illustrative of the aperture 31 in the stop plate 30 for one light emitter block 4. The stop plate 30 is provided with the aperture 31 in line with the respective centers (the optical axis) of the microlenses 5 comprising positive lenses L1 and L2 and the centers of the light emitter blocks 4. In this example, each aperture 31 is configured in such substantially oval shape as to make its diameter in the main scan direction larger than that in the sub-scan direction. As already noted, however, each aperture may have any of circular, oval, rectangular or other shape (the aperture is shown as a circle in Figs. 13 and 14).

While light rays coming out of the center of the light emitter block 4 and arriving at the image plane (photosensitive member 41) are shown in Figs. 13 and 14, it is understood that the light emitter block 4 here has no light emitter device 2 located at its center (Fig. 17): a light ray coming out of the center of this light emitter block 4 is assumed to be virtual. In Fig. 14, light rays adjacent to the light ray coming out of that center are leaving the light emitter devices 2 at both ends of the light emitter device 4.

The foregoing example is directed to the so-called bottom emission type optical write linehead 101 that uses as the light emitter devices 2 organic EL devices located on the back side of the glass substrate 20 to harness light emitted toward the surface side of that glass substrate 20; however, EL devices or LEDs may just as well be located as the light emitter device 2 on the surface side of the substrate.

In the foregoing example, the light emitter blocks 4 in the light emitter array 1 are lined up in three rows in the sub-scan direction with the front positions set off in the main scan direction, as can be seen from Fig.

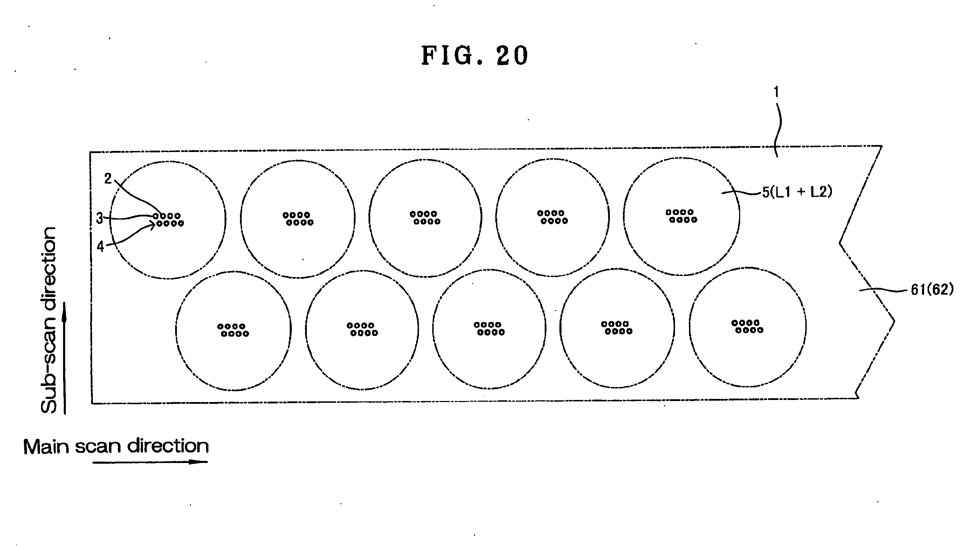

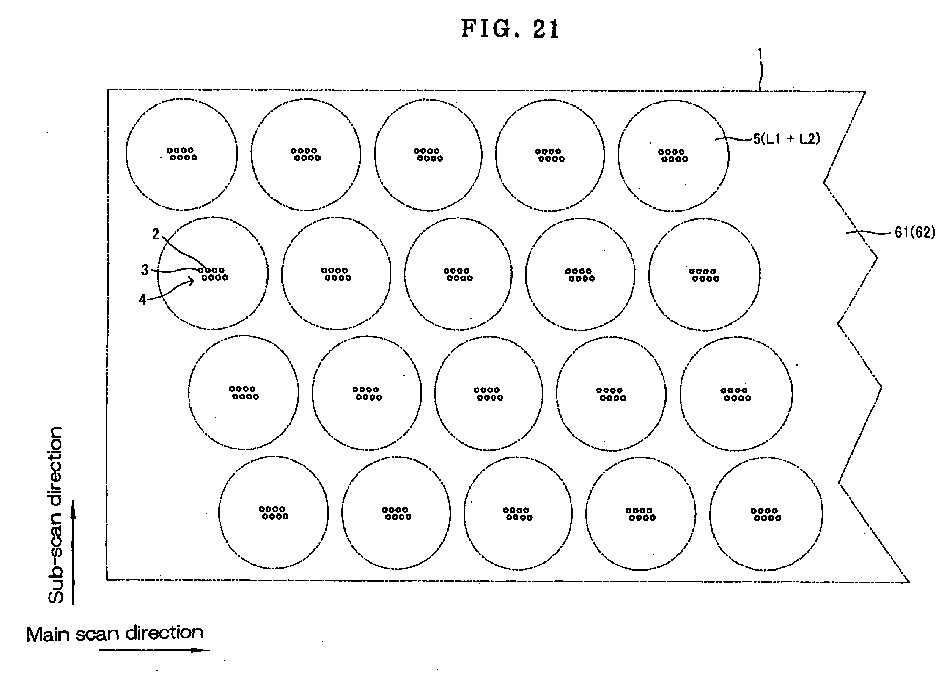

16. Likewise, the arrays of the microlenses 5, too, are lined up in three rows in the sub-scan direction with the front positions set off in the main scan direction. The light emitter blocks 4 lined up in the main scan direction may be lined up not only in three rows but also in two or four more rows in the sub-scan direction. Fig. 20 is illustrative, as in Fig. 16, of an arrangement comprising two rows, and Fig. 21 is illustrative, as in Fig. 16, of an arrangement comprising four rows. In these arrangements, too, the microlenses 5 lined up in the main scan direction are lined up in two or four rows in the sub-scan direction.

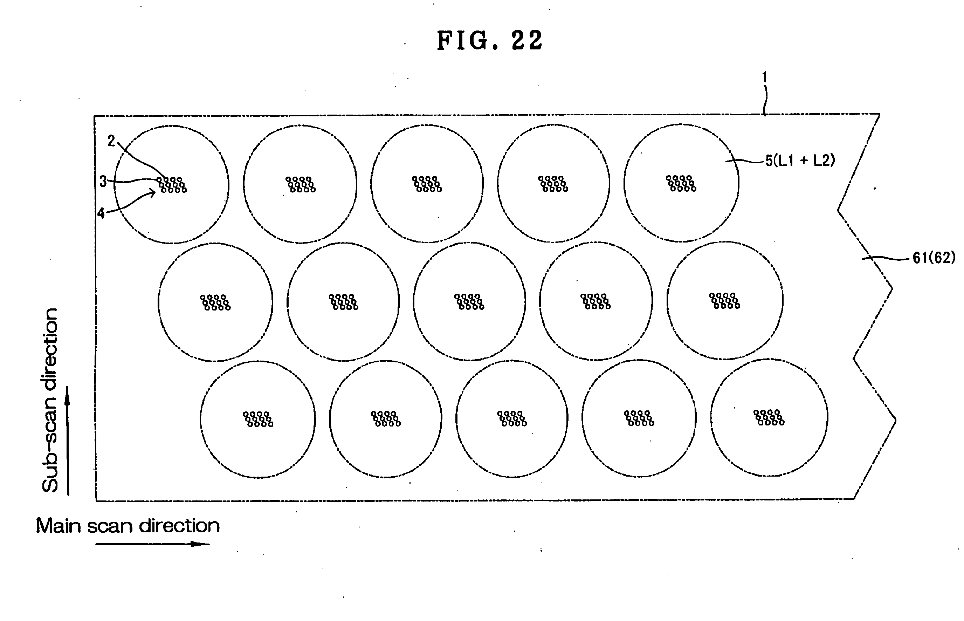

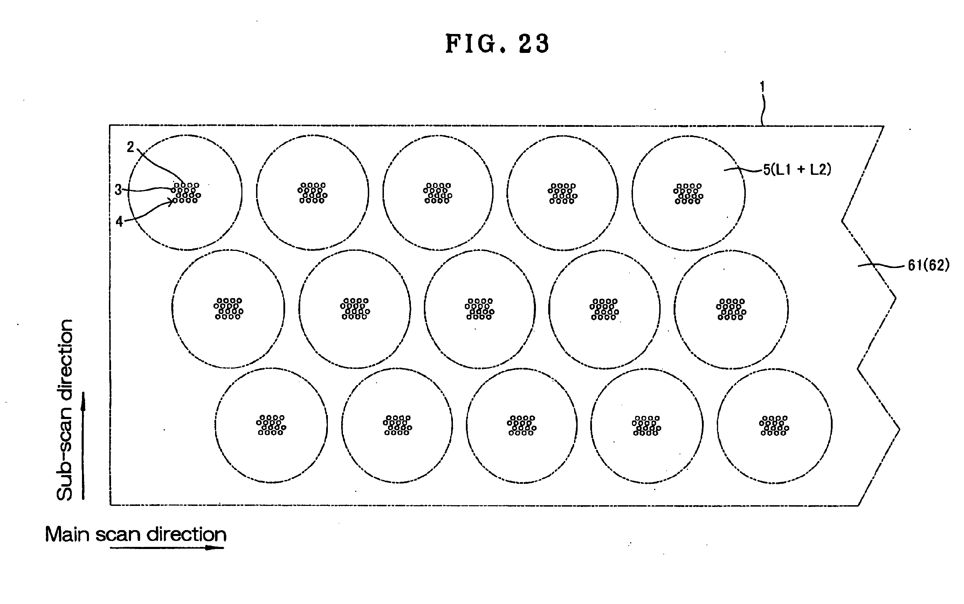

Further in the example of Fig. 16, one light emitter block 4 is made up of light emitter devices 3 lying in the main scan direction, and lined up in two rows in the sub-scan direction. The light emitter devices 3 may be lined up not only in two rows but also in any rows including one row. Fig. 22 is illustrative, as in Fig. 16, of an arrangement comprising three rows of light emitting devices 3, and Fig. 23 is illustrative, as in Fig. 16, of an arrangement comprising four rows of light emitter devices 3. The same would apply to arrangements comprising three or more rows of light emitter blocks 4, too.

Referring to Fig. 15, the image plane 41 is assumed to be in planar shape parallel with the surface of the light emitter array 1 and the surface of the array of microlenses 5, and the microlenses are all assumed to have the same property. In the invention, however, each microlens 5 is of telecentric construction on both its side, as already described; even when the distance of the image plane 41 from the microlenses 5 varies more or less for each row of the microlenses 5 lined up in the main scan direction, there is no misalignment of the imaging spots, and no density variation between the imaging spots. Accordingly, even when the photosensitive member 41 forming the image plane is in drum form (Figs. 9-11) or other curved surface form, the inventive optical write linehead 101 may just as well be used without giving rise to imaging spot misalignment and density variations for each row of light emitter blocks 4 on the photosensitive member 41.

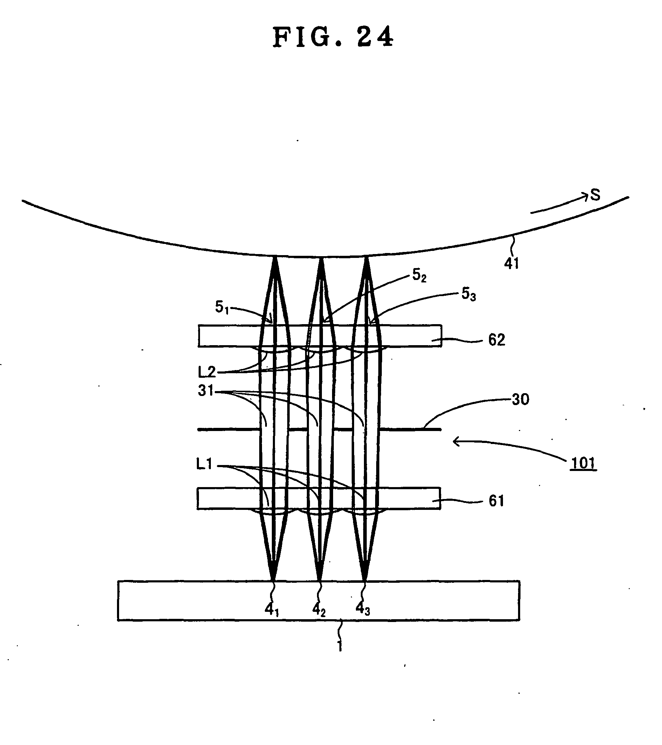

Fig. 24 is illustrative in section of what relations the optical system for the optical write linehead 101 has to the drum form of photosensitive member 41, as taken in the sub-scan direction. In this case, the light emitter blocks 4 are lined up in three rows with reference numerals $4_1$, $4_2$ and $4_3$ indicative of the light emitter blocks 4 at the first, second and third rows, respectively, and the associated microlenses 5 are indicated by $5_1$, $5_2$ and $5_3$, respectively. The microlenses 5 are all of the same construction, and spaced away from the light emitter blocks $4_1$, $4_2$ and $4_3$ by the same distance on the object side. However, the photosensitive member 41 is in cylindrical form having a generating line in the main scan direction; for instance, with the optical axis of the center microlens 5 set in such a way as to pass through the axis of the photosensitive member 41, the image-side distances of the microlenses $5_1$ and $5_3$ on both sides are going to vary slightly. As described above, however, the microlenses

$5_1$, $5_2$ and $5_3$ are each of telecentric construction on both its sides; even when there is a slight difference in the image-side distance, yet the imaging magnification is going to be the same, resulting in no misalignment of the imaging spots, and no density variation between the imaging spots for the aforesaid reason.

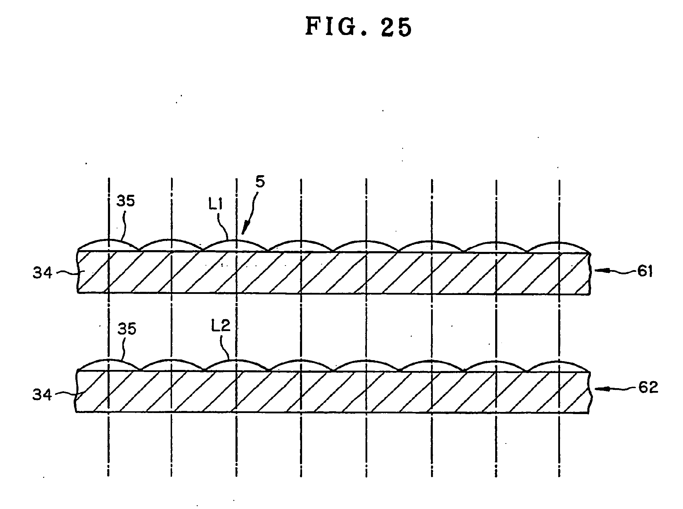

Referring here to the microlens arrays 61, 61 used with the inventive optical write linehead 101, they may be of any desired construction known so far in the art. Fig. 25 is illustrative in section, as taken in the main scan direction, of an array arrangement of microlenses 5 (Figs. 13 and 15) wherein a first microlens array 61 and a second microlens array 62 are combined such that the respective microlenses L1 and L2 are coaxially in alignment. In this example, one surface (on the object side) of the glass substrate 34 of each microlens array 61, 62 is provided with a cluster of lens surface portions 35 formed of transparent resin and in alignment to set up the microlenses L1, L2. In this case, if the image-side surface of the second microlens array 62 is configured in planar form, it may then be used as a microlens array for, e.g., a line -head's microlens array for imaging apparatus, resulting in improvements in cleanability because even when the developing agent toner scatters away and sticks onto the plane of the microlens array, it can easily be cleaned off.

Examples 1 to 4 are now explained with reference to specific numerical ones for the optical system used in the aforesaid examples. Examples 1, 2 and 3 are each directed to the microlens 5 in the case where the image plane 41 is in planar form, and Example 4 is directed to microlenses $5_1$, $5_2$ and $5_3$ in the case where the photosensitive drum 41 is used as the image plane 41.

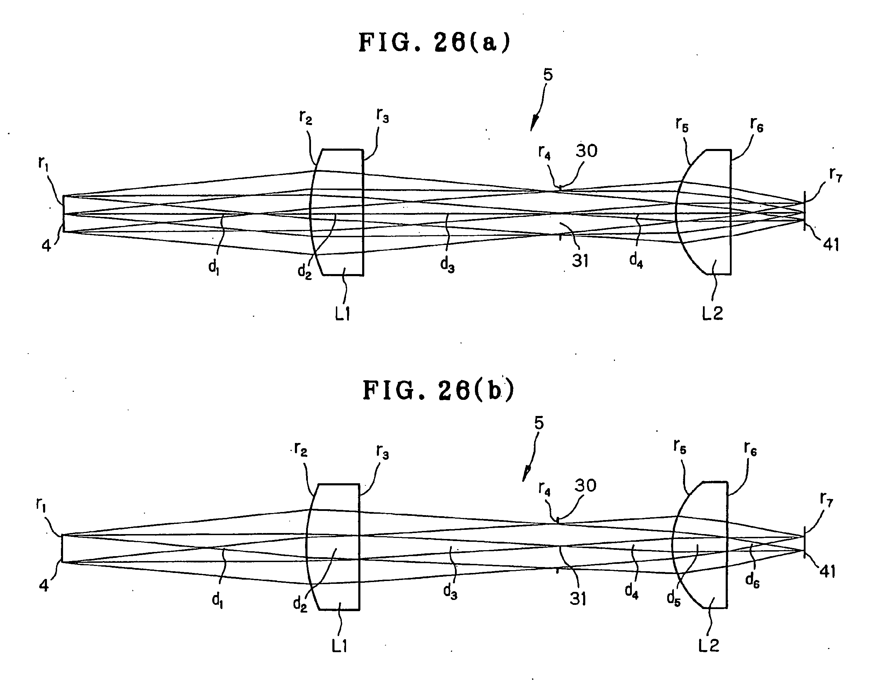

Figs. 26(a) and 26(b) are sectional views of the optical system corresponding to one microlens 5 in Example 1, as taken in the main- and sub-scan directions, respectively. In this example, there is no glass substrate located on the exit side of the light emitter device 2; the microlens 5 is configured in the form of a telephoto lens system consisting of confocal plano-convex positive lens L1 and plano-convex positive lens L2; and the stop plate 30 is located on a confocal plane between the plano-convex positive lens L1 and the plano-convex positive lens L2 (where the image-side (back) focus of the plano-convex positive lens L1 matches with the object-side (front) focus of the plano-convex positive lens L2).

Set out below are numerical data about this example. It is noted that, in order from the side of the light emitter block 4 toward the side of the photosensitive member (image plane) 41,

$r_1$ $r_2$ ⋯ the radius of curvature of each optical surface (in mm),
$d_1$ $d_2$ ⋯ the spacing between the respective optical surfaces (in mm),
$n_{d1}$, $n_{d2}$ ⋯ the d-line refractive index of each transparent medium, and

$v_{d1}$, $v_{d2}$ ⋯ the Abbe constant of each transparent medium. It is here noted that $r_1$, $r_2$ ⋯ are also indicative of the optical surfaces: the optical surface $r_1$ is the light emitter block (object plane) 4, the optical surfaces $r_2$ and $r_3$ are the object-side and image-side surfaces of the plane-convex positive lens L1, the optical surface $r_4$ is the aperture 31 in the stop plate 30, the optical surfaces $r_5$ and $r_6$ are the object-side and image-side surfaces of the plano-convex positive lens L2, and $r_7$ is the photosensitive member (image plane) 41. It is also noted that in what follows, the total width of the image-plane pixel group will refer to the width in the main scan direction of an image on the image plane of the light emitter block 4 that is an object.

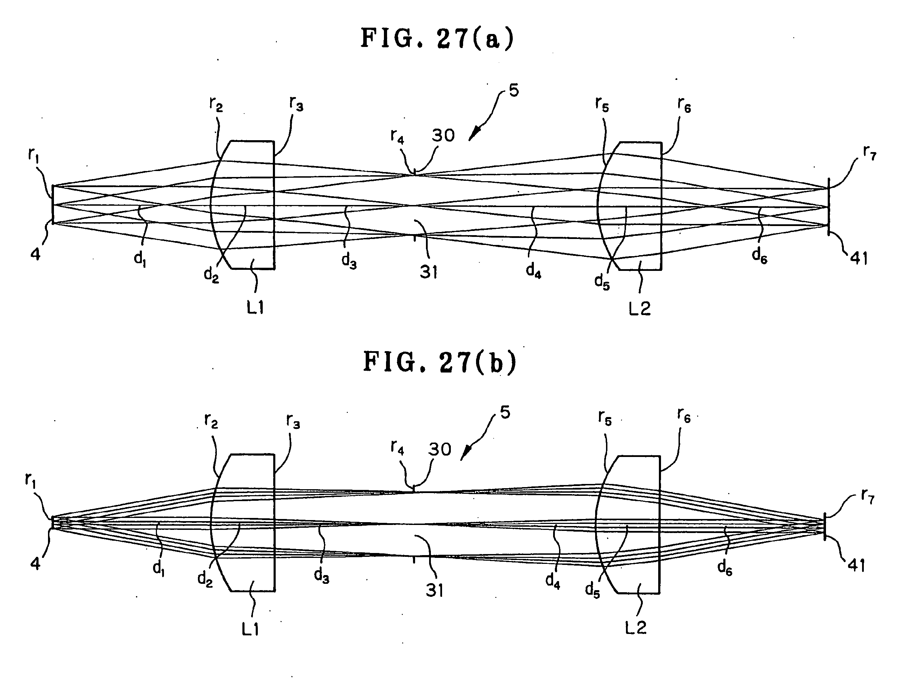

Figs. 27(a) and 27(b) are sectional views of the optical system corresponding to one microlens 5 in Example 2, as taken in the main and sub-scan directions, respectively. In this example, there is no glass substrate located on the exit side of the light emitter device 2; the microlens 5 is configured in the form of a telephoto lens system consisting of a plano-convex positive lens L1 and a plano-convex positive lens L2; and the stop plate 30 is located on a confocal plane between the plano-convex positive lens L1 and the plano-convex positive lens L2 (where the image-side (back) focus of the plano-convex positive lens L1 matches with the object-side (front) focus of the plano-convex positive lens L2).

Set out below are numerical data about this example. It is noted that, in order from the side of the light emitter block 4 toward the side of the photosensitive member (image plane) 41,

$r_1$, $r_2$ ⋯ the radius of curvature of each optical surface (in mm),
$d_1$, $d_2$ ... the spacing between the respective optical surfaces (in mm),
$n_{d1}$, $n_{d2}$ ⋯ the d-line refractive index of each transparent medium, and
$v_{d1}$, $v_{d2}$ ⋯ the Abbe constant of each transparent medium. It is here noted that $r_1$, $r_2$ ⋯ are also indicative of the optical surfaces: the optical surface $r_1$ is the light emitter block (object plane) 4, the optical surfaces $r_2$ and $r_3$ are the object-side and image-side surfaces of the plane-convex positive lens L1, the optical surface $r_4$ is the aperture 31 in the stop plate 30, the optical surfaces $r_5$ and $r_6$ are the object-side and image-side surfaces of the plano-convex positive lens L2, and $r_7$ is the photosensitive member (image plane) 41. It is also noted that the object-side and image-side surfaces of the plano-convex positive lens L1 and L2 are each an aspheric surface, with the aspheric surface shape represented by

$$cr^2/[1+\sqrt{\{1-(1+K)c^2r^2\}}]$$

where r is a distance from the optical axis, c is an axial curvature (1/r), and K is the conic coefficient. In the following numerical data, $K_2$ is the conic coefficient of the object-side surface of the plano-convex positive lens L1, and $K_5$ is the conic coefficient the object-side surface of the plano-convex positive lens L2.

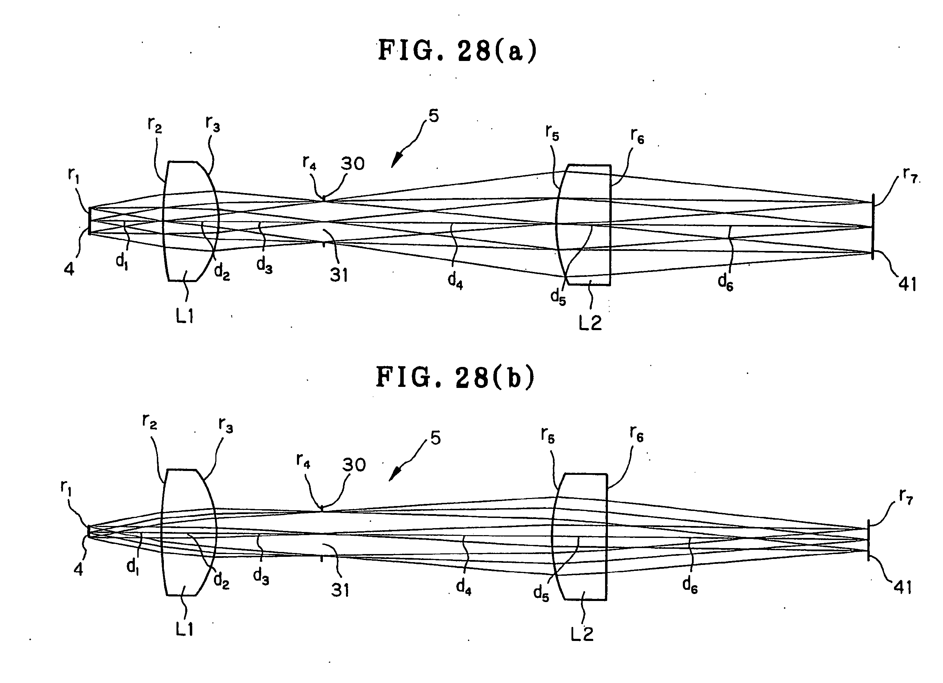

Figs. 28(a) and 28(b) are sectional views of the optical system corresponding to one microlens 5 in Example 3, as taken in the main and sub-scan directions, respectively. In this example, there is no glass substrate located on the exit side of the light emitter device 2; the microlens 5 is configured in the form of a telephoto lens system consisting of a double-convex positive lens L1 and a plane-convex positive lens L2; and the stop plate 30 is located on a confocal plane between the double-convex positive lens L1 and the plano-convex positive lens L2 (where the image-side (back) focus of the double-convex positive lens L1 matches with the object-side (front) focus of the plano-convex positive lens L2).

Set out below are numerical data about this example. It is noted that, in order from the side of the light emitter block 4 toward the side of the photosensitive member (image plane) 41,

$r_1, r_2 \cdots$ the radius of curvature of each optical surface (in mm),
$d_1, d_2 \cdots$ the spacing between the respective optical surfaces (in mm),
$n_{d1}, n_{d2} \cdots$ the d-line refractive index of each transparent medium, and
$\nu_{d1}, \nu_{d2} \cdots$ the Abbe constant of each transparent medium. It is here noted that $r_1, r_2 \cdots$ are also indicative of the optical surfaces: the optical surface $r_1$ is the light emitter block (object plane) 4, the optical surfaces $r_2$ and $r_3$ are the object-side and image-side surfaces of the double-convex positive lens L1, the optical surface $r_4$ is the aperture 31 in the stop plate 30, the optical surfaces $r_5$ and $r_6$ are the object-side and image-side surfaces of the plano-convex positive lens L2, and $r_7$ is the photosensitive member (image plane) 41. It is also noted that the object-side surfaces of the double-convex positive lens L1 and plano-convex positive lens L2 are each an aspheric surface, with the aspheric surface shape represented by

$$cr^2/[1+\sqrt{\{1-(1+K)c^2r^2\}}]$$

where r is a distance from the optical axis, c is an axial curvature (1/r), and K is the conic coefficient.

In the following numerical data, $K_2$ is the conic coefficient of the object-side surface of the double-convex positive lens L1, and $K_5$ is the conic coefficient the object-side surface of the plano-convex positive lens L2.

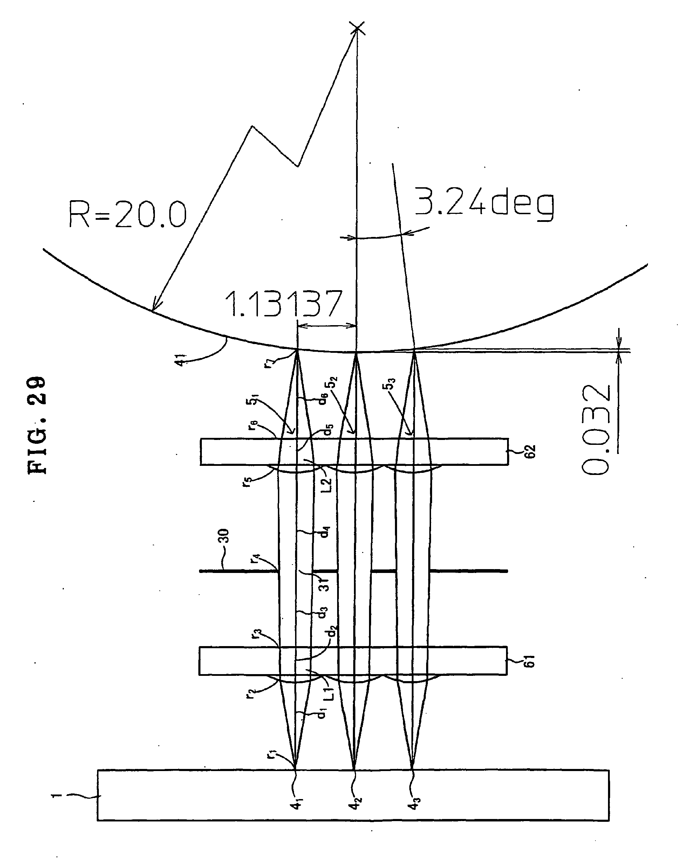

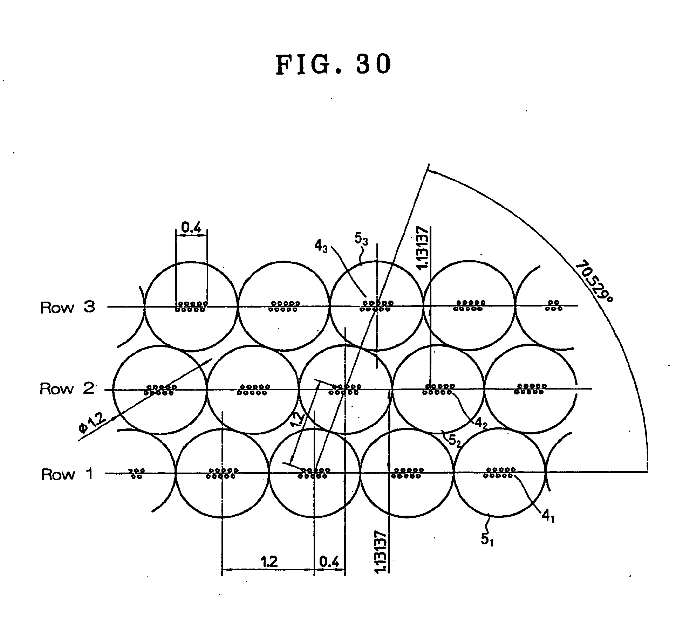

Fig. 29 is a sectional view of the optical system corresponding to three rows of microlenses $5_1$, $5_2$ and $5_3$ of Example 4, as taken in the sub-scan direction, and Fig. 30 is a plan view of the arrangement of the light-emitter arrays 1 and the microlens array in this example, with the required sizes (mm) and angles indicated. The lenses L1 and L2 forming the microlenses $5_1$, $5_2$ and $5_3$ in this example are of the same shape, and the spacing between the lenses L1 and 12, the position of the stop plate 30, and the spacing between the light emitter block $4_1$, $4_2$, $4_3$ and the lens L1 are the same, too. Only the spacing between the lens L2 and the photosensitive member (image plane) 41 and the tilt of the photosensitive member (image plane) 41 are different: in Fig. 29, for the microlens 51 alone, the radii of curvature of the respective optical surfaces ($r_1, r_2 \cdots$ (mm) and the spacing between the respective optical surfaces ($d_1$, $d_2 \cdots$) are given.

In this example, the microlens $5_1$, $5_2$, $5_3$ has no glass substrate located on the exit side of the light emitter device 2; the microlens 5 is configured in the form of a telephoto lens system made up of a plano-convex positive lens L1 and a plano-convex positive lens L2; and the stop plate 30 is located on a confocal plane between the plano-convex positive lens L1 and the plano-convex positive lens L2 (the plane at which the image-side (back) focus of the plano-convex positive lens L2 matches with the object-side (front) focus of the plano-concave positive lens L2).

And the optical axes of the respective microlenses $5_1$, $5_2$, $5_3$ are parallel with one another, and lenses of the same construction are used for the microlenses $5_1$, $5_2$ and $5_3$ in the first, second and third rows, with only the spacing between the lens L2 and the photosensitive member (image plane) 41 varying depending on the curvature (the radius of 20 mm) of the photosensitive member 41. The spacing between the photosensitive member (image plane) 41 and the lens L2 of both the microlenses $5_1$ and $5_3$ in the first and third rows is larger by 32 $\mu$m with respect to the microlens $5_2$ in the center or second row (Fig. 29). The tilt $\alpha$ of the image plane 41 with respect to the optical axis is 0.0° for the microlens $5_2$ in the center or second row, and 3.24° for the microlenses $5_1$, $5_3$ in both or the first and third rows (Fig. 29). Note here that the cylindrical photosensitive member 41 has a diameter of 40 mm (Fig. 29), and the pitch between the microlenses $5_1$, $5_2$ and $5_3$ is 1.13137 mm (Fig. 30).

Set out below are numerical data about the microlenses $5_1$, $5_2$, $5_3$ in this example. It is noted that, in order from the side of the light emitter block 4 toward the side of the photosensitive member (image plane) 41,

$r_1$, $r_2$ ··· the radius of curvature of each optical surface (in mm),

$d_1$, $d_2$ ··· the spacing between the respective optical surfaces (in mm),

$n_{d1}$, $n_{d2}$ ··· the d-line refractive index of each transparent medium, and

$\nu_{d1}$, $\nu_{d2}$ ··· the Abbe constant of each transparent medium. It is here noted that $r_1$, $r_2$ ... are also indicative of the optical surfaces: the optical surface $r_1$ is the light emitter block (object plane) 4, the optical surfaces $r_2$ and $r_3$ are the object-side and image-side surfaces of the double-convex positive lens L1, the optical surface $r_4$ is the aperture 31 in the stop plate 30, the optical surfaces $r_5$ and $r_6$ are the object-side and image-side surfaces of the plano-convex positive lens L2, and $r_7$ is the photosensitive member (image plane) 41. It is also noted that the object-side surfaces of the plano-convex positive lenses L1 and L2 are each an aspheric surface, with the aspheric surface shape represented by

$$cr^2/[1+\sqrt{\{1-(1+K)c^2r^2\}}]$$

where r is a distance from the optical axis, c is an axial curvature (1/r), and K is the conic coefficient. In the following numerical data, $K_2$ is the conic coefficient of the object-side surface of the plano-convex positive lens L1, and $K_5$ is the conic coefficient the object-side surface of the plano-convex positive lens L2. Note here that the tilt of the image plane is indicated by $\alpha7$.

Example 1

$r_1=\infty$ (object plane)　　$d_1=3.2325$
$r_2=1.5993$　　　$d_2=0.7000$　　　$n_{d1}=1.5168$
　　　$\nu_{d1}=64.2$
$r_3=\infty$　　$d_3=2.6200$
$r_4=\infty$ (stop)　　$d_4=1.5106$
$r_5=0.8003$　　　$d_5=0.7000$　　　$n_{d2}=1.5168$
　　　$\nu_{d2}=64.2$
$r_6=\infty$　　$d_6=1.000$
$r_7=\infty$ (image plane)
Wavelength used　　　632.5 nm
Optical magnification β　　　-0.5
Total width of the image-plane pixel group　　0.2 mm
Numerical aperture on the object side　　0.08

Example 2

$r_1=\infty$ (object plane)　　$d_1=1.7324$
$r_2=1.030207$　　　　　$d_2=0.7000$
　　　$n_{d1}=1.5168$　　$\nu_{d1}=64.2$　　$K_2=-1.4132$
$r_3=\infty$　　$d_3=1.5380$
$r_4=\infty$ (stop)　　$d_4=2.000$
$r_5=1.030207$　　　$d_5=0.7000$　　　$n_{d2}=1.5168$

　　　$\nu_{d2}=64.2$ $K_5=-0.97399$
$r_6=\infty$　　$d_6=1.7892$
$r_7=\infty$ (image plane)
Wavelength used　　　632.5 nm
Optical magnification β　　　-1.0
Total width of the image-plane pixel group　　0.4 mm
Numerical aperture on the object side　　0.16

Example 3

$r_1=\infty$ (object plane)　　$d_1=0.9621$
$r_2=2.3131$　　　$d_2=0.7000$　　　$n_{d1}=1.5168$
　　　$\nu_{d1}=64.2$　　$K_2=-38.3122$
$r_3=-1.0438$　　$d_3=1.3482$
$r_4=\infty$ (stop)　　$d_4=2.000$
$r_5=1.5453$　　　$d_5=0.7000$　　　$n_{d2}=1.5168$
　　　$\nu_{d2}=64.2$　　$K_5=-1.1520$
$r_6=\infty$　　$d_6=3.3375$
$r_7=\infty$ (image plane)
Wavelength used　　　632.5 nm
Optical magnification β　　　-2.0
Total width of the image-plane pixel group　　0.6 mm
Numerical aperture on the object side 0.16

Example 4

$r_1=\infty$ (object plane)　　$d_1=1.7324$
$r_2=1.0302$　　　$d_2=0.7000$　　　$n_{d1}=1.5168$
　　　$\nu_{d1}=64.2$　　$K_2=-1.41329$
$r_3=\infty$　　$d_3=1.538$
$r_4=\infty$ (stop)　　$d_4=2.000$
$r_5=1.0302$　　　　$d_5=0.7000$　　　$n_{d2}=1.5168$
　　　$\nu_{d2}=64.2$　　$K_5=-0.97399$
$r_6=\infty$ $d_6=1.7572$ (in the second row) 1.7892 (in the first, third rows)
$r_7=\infty$ (main scan direction) $\alpha_7=0.0°$ (in the second row) 20.0 (sub-scan direction)　　　3.24° (in the first, third rows)
　　　(image plane: cylindrical)
Wavelength used　　　632.5 nm
Optical magnification β　　　-1.0
Total width of the image-plane pixel group　　0.4 mm
Numerical aperture on the object side　　0.16
While the inventive linehead and the inventive imaging apparatus incorporating the same as defined and limited by the claims have been described with reference to the principles and examples, it is understood that the invention is by no means limited to them and so many modifications may be made.

**Claims**

1.　A linehead comprising a light emitter array (1) including a plurality of light emitter blocks (4) located at least in a first direction at intervals wherein each light emitter block includes at least one row of a plurality of light emitter devices (2) lined up in array form in the first direction, **characterized in that** a lens array (5) is located on an exit side of said light emitter array such that one positive lens system is in alignment with each light emitter block, a write surface (41) is located on an imaging side of said lens array, and each positive lens system forming a part of said lens array comprises a telephoto optical system having confocally located two lens groups (L1, L2) with an aperture stop (11) located at a confocal plane of said telephoto optical system.

2. The linehead according to claim 1, **characterized in that** said positive lens system comprises two positive lenses.

3. The linehead according to claim 1 or 2, **characterized in that** the positive lens systems forming said lens array are all the same.

4. The linehead according to any one of claims 1 to 3, **characterized in that** said write surface comprises a plane.

5. The linehead according to any one of claims 1 to 3, **characterized in that** said write surface comprises a cylindrical surface.

6. The linehead according to any one of claims 1 to 5, **characterized in that** at least the optical surface located in, and nearest to the image side of, an image-side positive lens group in said positive lens system defines a plane.

7. The linehead according to any one of claims 1 to 6, **characterized in that** said aperture stop has a shape capable of limiting an aperture diameter at least in the first direction.

8. The linehead according to any one of claims 1 to 7, **characterized in that** said light emitter block includes said light emitter devices lined up in a plurality of rows in a second direction orthogonal to the first direction.

9. The linehead according to any one of claims 1 to 7, **characterized in that** said light emitter blocks are lined up in a plurality of rows in a second direction orthogonal to the first direction.

10. The linehead according to any one of claims 1 to 9, **characterized in that** said light emitter device comprises an organic EL device.

11. The linehead according to any one of claims 1 to 9, **characterized in that** said light emitter device comprises an LED.

12. An imaging apparatus, **characterized by** comprising at least two imaging stations each comprising an imaging unit which comprises a charging means (42) around an image carrier, a linehead as recited in any one of claims 1 to 11, a developing means (44) and a transfer means (45), so that imaging is implemented in a tandem mode by letting a transfer medium pass through each station.

**Patentansprüche**

1. Zeilenkopf mit einer Lichtemitteranordnung (1), die mehrere zumindest in einer ersten Richtung mit Abständen angeordnete Lichtemitterblöcke (4) beinhaltet, wobei jeder Lichtemitterblock wenigstens eine Reihe von mehreren Lichtemittereinrichtungen (2) beinhaltet, die in der ersten Richtung in Reihenform angeordnet sind, **dadurch gekennzeichnet, dass** eine Linsenanordnung (5) so an einer Austrittsseite der Lichtemitteranordnung angeordnet ist, dass ein Positivlinsensystem zu jedem Lichtemitterblock ausgerichtet ist, eine Schreiboberfläche (41) an einer Abbildungsseite der Linsenanordnung angeordnet ist und jedes Positivlinsensystem, das einen Teil der Linsenanordnung bildet, ein optisches Teleobjektivsystem umfasst, das zwei konfokal angeordnete Linsengruppen (L1, L2) aufweist, wobei eine Öffnungsblende (11) an einer konfokalen Ebene des optischen Teleobjektivsystems angeordnet ist.

2. Zeilenkopf nach Anspruch 1, **dadurch gekennzeichnet, dass** das Positivlinsensystem zwei Positivlinsen umfasst.

3. Zeilenkopf nach Anspruch 1 oder 2, **dadurch gekennzeichnet, dass** die Positivlinsensysteme, welche die Linsenanordnung bilden, alle gleich sind.

4. Zeilenkopf nach einem der Ansprüche 1 bis 3, **dadurch gekennzeichnet, dass** die Schreiboberfläche eine Ebene umfasst.

5. Zeilenkopf nach einem der Ansprüche 1 bis 3, **dadurch gekennzeichnet, dass** die Schreiboberfläche eine zylindrische Oberfläche umfasst.

6. Zeilenkopf nach einem der Ansprüche 1 bis 5, **dadurch gekennzeichnet, dass** zumindest die optische Oberfläche, die in einer bildseitigen Positivlinsengruppe in dem Positivlinsensystem und am nächsten zu deren Bildseite angeordnet ist, eine Ebene definiert.

7. Zeilenkopf nach einem der Ansprüche 1 bis 6, **dadurch gekennzeichnet, dass** die Öffnungsblende eine Form aufweist, die dafür geeignet ist, zumindest in der ersten Richtung einen Öffnungsdurchmesser einzuschränken.

8. Zeilenkopf nach einem der Ansprüche 1 bis 7, **dadurch gekennzeichnet, dass** der Lichtemitterblock die Lichtemittereinrichtungen beinhaltet, die in mehreren Reihen in einer zweiten Richtung senkrecht zu der ersten Richtung angeordnet sind.

9. Zeilenkopf nach einem der Ansprüche 1 bis 7, **dadurch gekennzeichnet, dass** die Lichtemitterblökke in mehreren Reihen in einer zweiten Richtung senkrecht zu der ersten Richtung angeordnet sind.

10. Zeilenkopf nach einem der Ansprüche 1 bis 9, **dadurch gekennzeichnet, dass** die Lichtemittereinrichtung eine organische EL-Einrichtung umfasst.

11. Zeilenkopf nach einem der Ansprüche 1 bis 9, **dadurch gekennzeichnet, dass** die Lichtemittereinrichtung eine LED umfasst.

12. Abbildungsvorrichtung, **dadurch gekennzeichnet, dass** sie wenigstens zwei Abbildungsstationen umfasst, die jeweils eine Abbildungseinheit umfassen, die ein Lademittel (42) um einen Bildträger herum, einen Zeilenkopf nach einem der Ansprüche 1 bis 11, ein Entwicklungsmittel (44) und ein Übertragungsmittel (45) umfasst, so dass eine Abbildung in einem Tandemmodus durchgeführt wird, indem ein Übertragungsmedium durch jede Station geführt wird.

**Revendications**

1. Tête en ligne comportant un réseau d'émetteurs de lumière (1) comprenant une pluralité de blocs d'émetteurs de lumière (4) disposés au moins dans une première direction à des intervalles, dans laquelle chaque bloc d'émetteurs de lumière comprend au moins une rangée d'une pluralité de dispositifs d'émission de lumière (2) alignés sous la forme d'un réseau dans la première direction, **caractérisée en ce qu'**un réseau de lentilles (5) est disposé sur un côté de sortie dudit réseau d'émetteurs de lumière de telle sorte qu'un système de lentille convergente est en alignement avec chaque bloc d'émetteurs de lumière, une surface d'écriture (41) est disposée sur un côté de formation d'image dudit réseau de lentilles, et chaque système de lentille convergente formant une partie dudit réseau de lentilles comporte un système optique de téléobjectif ayant deux groupes de lentilles (L1, L2) disposés avec un foyer commun avec un diaphragme (11) disposé dans un plan de foyer commun dudit système optique de téléobjectif.

2. Tête en ligne selon la revendication 1, **caractérisée**

**en ce que** ledit système de lentille convergente comporte deux lentilles convergentes.

3. Tête en ligne selon la revendication 1 ou 2, **caractérisée en ce que** les systèmes à lentille convergente formant ledit réseau de lentilles sont tous les mêmes.

4. Tête en ligne selon l'une quelconque des revendications 1 à 3, **caractérisé en ce que** ladite surface d'écriture comporte un plan.

5. Tête en ligne selon l'une quelconque des revendications 1 à 3, **caractérisée en ce que** ladite surface d'écriture comporte une surface cylindrique.

6. Tête en ligne selon l'une quelconque des revendications 1 à 5, **caractérisée en ce que** au moins la surface optique disposée dans, et la plus proche du côté d'image de, un groupe de lentilles convergentes du côté image dans ledit système de lentille convergente définit un plan.

7. Tête en ligne selon l'une quelconque des revendications 1 à 6, **caractérisée en ce que** ledit diaphragme a une forme capable de limiter un diamètre d'ouverture au moins dans la première direction.

8. Tête en ligne selon l'une quelconque des revendications 1 à 7, **caractérisée en ce que** ledit bloc d'émetteurs de lumière comprend lesdits dispositifs d'émission de lumière alignés en une pluralité de rangées dans une deuxième direction perpendiculaire à la première direction.

9. Tête en ligne selon l'une quelconque des revendications 1 à 7, **caractérisée en ce que** lesdits blocs d'émetteurs de lumière sont alignés en une pluralité de rangées dans une deuxième direction perpendiculaire à la première direction.

10. Tête en ligne selon l'une quelconque des revendications 1 à 9, **caractérisée en ce que** ledit dispositif d'émission de lumière comporte un dispositif EL organique.

11. Tête en ligne selon l'une quelconque des revendications 1 à 9, **caractérisée en ce que** ledit dispositif d'émission de lumière comporte une DEL.

12. Appareil de formation d'image, **caractérisé en ce qu'**il comporte au moins deux postes de formation d'image comportant chacun une unité de formation d'image qui comporte des moyens de charge (42) autour d'un support d'image, une tête en ligne selon l'une quelconque des revendications 1 à 11, des moyens de développement (44) et des moyens de transfert (45), de telle sorte qu'une formation d'image est mise en oeuvre dans un mode en tandem en laissant un support de transfert passer à travers chaque poste.

FIG. 1

## FIG. 2

EP 2 020 293 B1

FIG. 3

# FIG. 4

EP 2 020 293 B1

# FIG. 5

| Pixel No.<br>Row No. | 1 | 2 | 3 | 4 | 5 | 6 | 7 | 8 | ... |
|---|---|---|---|---|---|---|---|---|---|
| 1 | | | | | | | | | ... |
| 2 | | | | | | | | | ... |
| 3 | | | | | | | | | ... |

▦ ··· Read first

▨ ··· Read after time T

EP 2 020 293 B1

FIG. 6

## FIG. 7

Main scan direction →

Sub-scan direction →

FIG. 8

FIG. 9

EP 2 020 293 B1

# FIG. 10

Main scan direction

FIG. 11

## FIG. 12(a)

## FIG. 12(b)

# FIG. 13

# FIG. 14

EP 2 020 293 B1

# FIG. 15

# FIG. 16

FIG. 17

5(L1+L2)

3

2

4

Sub-scan direction

Main scan direction

FIG. 18

EP 2 020 293 B1

# FIG. 19

FIG. 20

5(L1 + L2)

61(62)

1

2
3
4

Sub-scan direction

Main scan direction

# FIG. 21

EP 2 020 293 B1

Sub-scan direction

Main scan direction

# FIG. 22

Sub-scan direction

Main scan direction

1

5(L1 + L2)

61(62)

2

3

4

EP 2 020 293 B1

# FIG. 23

EP 2 020 293 B1

# FIG. 24

# FIG. 25

FIG. 26(a)

FIG. 26(a)

FIG. 26(b)

EP 2 020 293 B1

# FIG. 27(a)

# FIG. 27(b)

FIG. 28(a)

FIG. 28(b)

FIG. 29

# FIG. 30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007198405 A
- JP 2004546 A
- JP 6344596 A
- JP 6278314 A
- US 6480219 B1
- US 6489984 B1
- US 2005179962 A